# EUROPÄISCHE PATENTSCHRIFT

(11) **EP 3 902 713 B1**
(45) Veröffentlichungstag und Bekanntmachung des Hinweises auf die Patenterteilung: **16.08.2023**
(21) Anmeldenummer: 19832362.8
(22) Anmeldetag: 19.12.2019
(51) Int. Cl.: B60S 1/38

(54) **WISCHBLATTVORRICHTUNG**
WIPER BLADE DEVICE
DISPOSITIF FORMANT BALAI D'ESSUIE-GLACE

(30) Priorität: 27.12.2018 DE 102018251711
(43) Veröffentlichungstag der Anmeldung: 03.11.2021
(73) Patentinhaber: Robert Bosch GmbH, 70442 Stuttgart (DE)
(72) Erfinder: DE BLOCK, Peter, 3545 Halen (BE); ANGYAL, Adam, 3980 Satoraljaujhely (HU); BUSEYNE, Wim, 3500 Hasselt (BE); BUBBA, Marcello, 3210 Linden (BE); VERELST, Hubert, 3300 Tienen (BE); TRUYENS, Stijn, 3300 Tienen (BE); NIVELLES, Christiaan, 3530 Helchteren (BE); HENDRICKX, Kevin, 70469 Stuttgart (DE)
(86) Internationale Anmeldenummer: PCT/EP2019/086323
(87) Internationale Veröffentlichungsnummer: WO 2020/136079

(56) Entgegenhaltungen:
- WO-A1-2009/065670
- WO-A1-2009/092669
- DE-A1- 10 234 267
- DE-A1-102012 210 947
- DE-A1-102013 208 578
- DE-U1- 20 221 548

## Beschreibung

### Stand der Technik

Es ist bereits eine Wischblattvorrichtung mit zumindest einer Federschiene, mit zumindest einer Windabweisereinheit und mit zumindest einer Wischleisteneinheit, welche zumindest ein erstes Teilelement, insbesondere einen Wischgrundkörper, und zumindest eine Wischlippe umfasst, vorgeschlagen worden.

Aus den gattungsgemäßen Dokumenten DE 202 21 548 U1, DE 10 2012 210947 A1, DE 102 34 267 A1 und DE 10 2013 208578 A1 ist bereits eine Wischervorrichtung mit einem Wischblattbauteil und einer Federschiene bekannt.

### Offenbarung der Erfindung

Die Erfindung geht aus von einer Wischblattvorrichtung mit zumindest einer Federschiene, mit zumindest einer Windabweisereinheit und mit zumindest einer Wischleisteneinheit, welche zumindest ein erstes Teilelement, insbesondere einen Wischgrundkörper, und zumindest eine Wischlippe umfasst.

Es wird vorgeschlagen, dass die Wischblattvorrichtung zumindest ein von der zumindest einen Federschiene verschieden ausgebildetes Fixierungselement umfasst, welches in einem montierten Zustand zumindest zu einer Reduzierung eines Spiels der zumindest einen Wischleisteneinheit gegenüber der Windabweisereinheit und/oder der Federschiene und/oder zumindest eines Teilelements der Wischleisteneinheit gegenüber der zumindest einen Wischlippe dazu vorgesehen ist einen magnetischen Kraftschluss, einen Stoffschluss und/oder einen durch Verformung der Wischleisteneinheit erzeugten Formschluss zwischen der Wischleisteneinheit und der Windabweisereinheit und/oder der Federschiene herzustellen.

Unter einer "Wischblattvorrichtung" soll in diesem Zusammenhang insbesondere zumindest ein Teil, insbesondere eine Unterbaugruppe, eines Wischblatts, insbesondere eines Scheibenwischblatts und vorteilhaft eines Fahrzeugscheibenwischblatts verstanden werden. Insbesondere kann die Wischblattvorrichtung auch das gesamte Wischblatt, insbesondere das gesamte Scheibenwischblatt und vorteilhaft das gesamte Fahrzeugscheibenwischblatt umfassen. Es ist denkbar, dass die Wischblattvorrichtung dabei zumindest als Teil eines Wischblatts in Flachbalkenbauweise und/oder als Wischblatt in Flachbalkenbauweise ausgebildet ist. Vorzugsweise ist die Wischblattvorrichtung zu einem Einsatz an einem Fahrzeug vorgesehen. Vorzugsweise ist die Wischblattvorrichtung zu einer Reinigung einer Fläche, insbesondere einer Scheibe an einem Fahrzeug vorgesehen. Insbesondere ist die Wischblattvorrichtung zu einer Reinigung einer Fahrzeugscheibe mit einem Fahrzeug, insbesondere einem Wischarm eines Fahrzeugs gekoppelt. Unter "gekoppelt" soll in diesem Zusammenhang insbesondere formschlüssig und/oder kraftschlüssig verbunden verstanden werden. Unter "vorgesehen" soll insbesondere speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Wischleisteneinheit" soll insbesondere eine Einheit aus zumindest einem elastischen Material verstanden werden, die dazu vorgesehen ist, zu einer Reinigung einer zu reinigenden Fläche, insbesondere einer Scheibenfläche, vorzugsweise einer Fahrzeugscheibe, in einem Kontakt über die zu reinigende Fläche bewegt zu werden. Vorzugsweise weist die Wischleisteneinheit einen Wischgrundkörper und eine Wischlippe auf. Die Wischlippe bildet vorzugsweise den Kontaktbereich der Wischleisteneinheit mit der zu reinigenden Scheibe aus. Der Wischgrundkörper ist durch die Wischlippe von der zu reinigenden Scheibe beabstandet ausgebildet. Der Wischgrundkörper ist vorzugsweise fest, insbesondere einstückig, mit der Wischlippe verbunden. Bevorzugt ist die Wischleisteneinheit aus einem natürlichen oder künstlichen Elastomer, insbesondere aus einem Kunststoff und/oder aus Gummi, hergestellt. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren und/oder Extrusionsverfahren, insbesondere Co-Extrusionsverfahren.

Bevorzugt ist der Wischgrundkörper der Wischleisteneinheit dazu ausgebildet zumindest teilweise zumindest eine Federschiene zu einer Stabilisierung aufzunehmen. Zur Aufnahme der Federschiene bildet die Wischereinheit insbesondere zumindest teilweise und vorzugsweise vollständig eine Federschienenaufnahme aus. Unter einer "Federschienenaufnahme" soll in diesem Zusammenhang insbesondere ein Kanal oder eine Nut verstanden werden, der/die dazu vorgesehen ist, die Federschiene zumindest teilweise aufzunehmen. Vorzugsweise ist die Federschienenaufnahme dazu vorgesehen, die Federschiene zumindest über einen wesentlichen Teil einer Haupterstreckungsrichtung wesentlich zu umgreifen. Insbesondere bildet die Wischleisteneinheit zumindest eine als Federschienenkanal ausgebildete Federschienenaufnahme aus, welche zu einer vollständigen Aufnahme der zumindest einen Federschiene vorgesehen ist. Alternativ oder zusätzlich bildet die Wischleisteneinheit zwei als seitliche Aufnahmenuten ausgebildete Federschienenaufnahmen aus, welche zu einer teilweisen Aufnahme von jeweils zumindest einer Federschiene vorgesehen sind. Durch die zumindest eine Federschienenaufnahme ist die zumindest eine Wischleisteneinheit mit der zumindest einen Federschiene verbindbar ausgebildet. Die Abmessungen der zumindest einen Federschienenaufnahme sind an die Form und Größe der zumindest einen Federschiene angepasst. Vorteilhaft ist die Wischleisteneinheit formschlüssig, insbesondere kraftschlüssig mit der Federschiene verbunden.

Unter einer "Federschiene" soll insbesondere ein makroskopisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Vorzugsweise ist die Federschiene zumindest teilweise aus einem Federstahl ausgebildet. Alternativ oder zusätzlich ist vorstellbar, dass die Federschiene zumindest teilweise aus einem Kunststoff, aus einem Verbundwerkstoff oder aus einem anderen, einem Fachmann als sinnvoll erscheinenden Material ausgebildet. Vorzugsweise weist die Federschiene in einem unbelasteten Zustand im Wesentlichen eine Form eines gebogenen Stabs und besonders vorteilhaft eines abgeflachten gebogenen Stabs auf. Weiterhin vorteilhaft ist die Federschiene einteilig ausgebildet. Alternativ kann die Federschiene auch mehrteilig ausgebildet sein. Besonders vorteilhaft ist eine Krümmung der Federschiene längs der Federschiene in einem unbelasteten Zustand größer als eine Krümmung einer Fahrzeugscheibenoberfläche eines Kraftfahrzeugs, insbesondere einer Fahrzeugscheibe, über welche die Federschiene in wenigstens einem Betriebszustand geführt wird. Unter einem "elastischen Objekt" soll insbesondere ein Objekt verstanden werden, das wiederholt verformbar ist, ohne dass dadurch das Objekt mechanisch beschädigt oder zerstört wird, und das insbesondere nach einer Verformung selbstständig wieder einer Grundform zustrebt. Vorzugsweise umfasst die Wischblattvorrichtung zumindest zwei, insbesondere genau zwei, Federschienen. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden.

Unter einer "Windabweisereinheit" soll in diesem Zusammenhang insbesondere eine Einheit verstanden werden, die dazu vorgesehen ist, eine auf die Wischblattvorrichtung wirkende Luftanströmung beziehungsweise einen Fahrtwind abzuweisen und/oder für ein Anpressen des Wischblatts auf eine zu wischende Oberfläche zu nutzen. Vorzugsweise besteht die Windabweisereinheit zumindest teilweise aus Gummi und/oder aus einem wenigstens teilelastischen Kunststoff. Bevorzugt weist die Windabweisereinheit zumindest eine konkave Anströmfläche auf. Die Windabweisereinheit weicht insbesondere von einer Endkappe, einer Federschiene und/oder von einem Wischblattadapter ab. Vorteilhaft erstreckt sich die Windabweisereinheit in einem Betriebszustand über zumindest einen Teil, vorzugsweise über zumindest einen Großteil einer Erstreckung der Wischblattvorrichtung entlang der Haupterstreckungsrichtung. Vorzugsweise ist die zumindest eine Windabweisereinheit zumindest einstückig, insbesondere einteilig, mit der zumindest einen Wischleisteneinheit ausgebildet. Vorzugsweise ist die Windabweisereinheit als Oberflächenstruktur der Wischleisteneinheit ausgebildet.

Das zumindest eine Fixierungselement ist vorzugsweise in einem montierten Zustand zumindest zu einer Reduzierung eines lateralen Spiels der zumindest einen Wischleisteneinheit gegenüber der zumindest einen Windabweisereinheit vorgesehen. Unter einem "lateralen Spiel" soll insbesondere ein Bewegungsfreiraum der betreffenden Bauteile in eine Wischrichtung verstanden werden. Denkbar ist auch, dass das zumindest eine Fixierungselement in einem montierten Zustand zumindest zu einer Reduzierung eines lateralen Spiels der zumindest einen Wischleisteneinheit gegenüber der zumindest einen Federschiene vorgesehen ist. Denkbar ist ebenfalls, dass das zumindest eine Fixierungselement in einem montierten Zustand zumindest zu einer Reduzierung eines lateralen Spiels zumindest eines Teilelements, insbesondere des Wischgrundkörpers, gegenüber der zumindest einen Wischlippe vorgesehen ist.

Das zumindest eine Fixierungselement ist vorzugsweise zu einem magnetischen Kraftschluss zwischen der zumindest einen Wischleisteneinheit und der zumindest einen Federschiene vorgesehen, wobei die magnetische Kraft vorzugsweise im Wesentlichen senkrecht zu einer Wischrichtung und zur Hauptersteckungsrichtung der Wischleisteneinheit wirkt.

Alternativ oder zusätzlich ist das zumindest eine Fixierungselement vorzugsweise zu einem durch Adhäsionskräfte hervorgerufenen Stoffschluss zwischen der Wischleisteneinheit und der zumindest einen Federschiene vorgesehen. Das zumindest eine Fixierungselement ist vorzugsweise zu einem durch Adhäsionskräfte hervorgerufenen Stoffschluss zwischen zumindest einem Teilelement der Wischleisteneinheit, insbesondere dem Wischgrundkörper, und der zumindest einen Wischlippe vorgesehen.

Alternativ oder zusätzlich ist das zumindest eine Fixierungselement vorzugsweise zu einem Formschluss durch Verformung der Wischleisteneinheit, insbesondere einem zumindest teilweisen Eindrücken der zumindest einen Wischleisteneinheit und/oder einem komprimierenden Andrücken an die zumindest eine Federschiene, zwischen einem Teilelement der Wischleisteneinheit, insbesondere dem Wischgrundkörper, und der Wischlippe vorgesehen. Das zumindest eine Fixierungselement ist vorzugsweise zu einem Formschluss durch Verformung der zumindest einen Wischleisteneinheit, insbesondere einem zumindest teilweisen Eindrücken der Wischleisteneinheit und/oder einem Andrücken an die zumindest eine Federschiene, zwischen der zumindest einen Wischleisteneinheit und der zumindest einen Windabweisereinheit vorgesehen. Das zumindest eine Fixierungselement ist vorzugsweise zu einem Formschluss durch Verformung der Wischleisteneinheit, insbesondere einem zumindest teilweisen Eindrücken der Wischleisteneinheit und/oder einem Andrücken an die zumindest eine Federschiene, zwischen der zumindest einen Wischlippe und/oder dem zumindest einen Wischgrundkörper und der zumindest einen Windabweisereinheit vorgesehen. Vorzugsweise weist das zumindest eine Fixierungselement zumindest einen Kontaktbereich mit der zumindest einen Wischleisteneinheit auf.

Denkbar ist, dass die Wischblattvorrichtung eine Vielzahl an Fixierungselementen aufweist. Vorzugsweise ist das zumindest ein Fixierungselement an einer Längsseite der Wischleisteneinheit angeordnet. Es ist denkbar, dass eine von der Haupterstreckungslänge der Wischleisteneinheit abhängige Anzahl an Fixierungselementen, insbesondere über eine Erstreckung der Wischleisteneinheit verteilt, an einer Längsseite der Wischleisteneinheit angeordnet sind. Vorzugsweise sind die Fixierelemente insbesondere auf einer Wischrichtung zugewandten Seite der Wischleisteneinheit angeordnet. Im Fall, dass die Wischblattvorrichtung eine Vielzahl an Fixierungselementen aufweist, sind die Fixierungselemente vorzugsweise in einem Abstand von 1-25 mm, insbesondere auch von 25-50 mm, alternativ in einem Abstand von 50-75 mm oder in einem Abstand von 75-100 mm, angeordnet. Unter einer "Wischrichtung" soll vorzugsweise eine Richtung senkrecht zur Hauptersteckungsrichtung der Wischleisteneinheit verstanden werden, welche senkrecht zu einer Flächennormalen einer zu reinigenden Fläche verläuft. Unter einer "Haupterstreckungslänge" soll die maximale Länge verstanden werden, welche ein Objekt entlang seiner Haupterstreckungsrichtung aufweist. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt.

Durch die erfindungsgemäße Ausgestaltung der Wischblattvorrichtung kann insbesondere eine vorteilhafte Stabilisierung der Wischleisteneinheit erreicht werden. Es kann insbesondere ein vorteilhaft leises Wischen der Wischblattvorrichtung erreicht werden. Die Wischlippe wird vorteilhaft bei einem Wischvorgang fixiert. Das zumindest eine Fixierungselement kann vorteilhaft leicht ausgebildet werden. Das zumindest eine Fixierungselement kann vorteilhaft ein geräuschvolles Wischen verhindern.

Ferner wird vorgeschlagen, dass die Wischblattvorrichtung zumindest ein weiteres von der zumindest einen Federschiene verschieden ausgebildetes Fixierungselement aufweist, welches in einem montierten Zustand zumindest zu einer Reduzierung eines Spiels der zumindest einen Wischleisteneinheit gegenüber der Windabweisereinheit und/oder der Federschiene und/oder zumindest eines Teilelements der Wischleisteneinheit gegenüber der zumindest einen Wischlippe dazu vorgesehen ist einen magnetischen Kraftschluss, einen Stoffschluss und/oder einen durch Verformung der Wischleisteneinheit erzeugten Formschluss zwischen der Wischleisteneinheit und der Windabweisereinheit und/oder der Federschiene herzustellen. Das zumindest eine weitere Fixierungselement ist dazu vorgesehen die zumindest eine Wischleisteneinheit analog zu dem zumindest einen Fixierungselement zu fixieren. Unter "analog fixieren" soll vorzugsweise verstanden werden, dass ein Element zu einer Fixierung eines anderen Elements vorgesehen ist und die Fixierung auf die gleiche Weise durchgeführt wird, wie von einem Bezugselement an einer anderen Stelle. Beispielsweise ist das weitere Fixierungselement analog zu einem ersten Fixiermagneten ebenfalls als Magnet ausgebildet und fixiert auf diese Weise dasselbe Element wie der erste Fixiermagnet. Vorteilhaft wird ein leises Wischen durch die Wischblattvorrichtung ermöglicht. Es ist denkbar, dass die Wischblattvorrichtung eine Vielzahl an weiteren Fixierungselementen aufweist. Dadurch kann eine vorteilhafte Stabilisierung der Wischleisteneinheit in beide Wischrichtungen gewährleistet werden.

Des Weiteren wird vorgeschlagen, dass das zumindest eine weitere Fixierungselement auf einer relativ zu dem zumindest einen Fixierungselement gegenüberliegenden Seite der Wischleisteneinheit angeordnet ist. Vorzugsweise sind das zumindest eine Fixierungselement und das zumindest eine weitere Fixierungselement auf in Wischrichtung gegenüberliegenden Seiten an den maximalen Erstreckungen der zumindest einen Wischleisteneinheit angeordnet. Im Fall, dass die Wischblattvorrichtung eine Vielzahl an weiteren Fixierungselementen aufweist, sind die weiteren Fixierungselemente vorzugsweise in einem Abstand von 1-25 mm, insbesondere auch von 25-50 mm, alternativ in einem Abstand von 50-75 mm oder in einem Abstand von 75-100 mm, angeordnet. Dadurch kann ein vorteilhaft gleichmäßiger Wischvorgang gewährleistet werden.

Des Weiteren wird vorgeschlagen, dass das zumindest eine Fixierungselement in einem Bereich zwischen der zumindest einen Wischlippe und der zumindest einen Federschiene angeordnet ist. Vorzugsweise verbindet das zumindest eine Fixierungselement die zumindest eine Wischlippe zumindest teilweise mit der Federschiene. Unter einem "Bereich zwischen der zumindest einen Wischlippe und der zumindest einen Federschiene" soll ein Bereich verstanden werden, welcher im Querschnitt, entlang einer Ebene senkrecht zur Haupterstreckungsrichtung der Wischleisteneinheit, mindestens einen Berührungspunkt mit einer geradlinigen Verbindungsstrecke aufweist, welche die zumindest eine Wischlippe und die zumindest eine Federschiene verbindet. Vorzugsweise soll darunter insbesondere ein Spalt zwischen der Wischlippe und der Federschiene verstanden werden, welcher in einem Bereich eines minimalen Abstands zwischen der Wischlippe und der Federschiene angeordnet ist. Vorteilhaft wird die Wischlippe beim Wischvorgang stabilisiert. Dadurch kann die Wischlippe beim Wischvorgang mit vorteilhaft geringem Materialeinsatz stabilisiert werden.

Des Weiteren wird vorgeschlagen, dass sich das zumindest eine Fixierungselement zumindest im Wesentlichen über die gesamte Haupterstreckung der Wischblattvorrichtung erstreckt. Im Falle von einem einzigen Fixierungselement erstreckt sich dieses über die gesamte Haupterstreckung, insbesondere Haupterstreckungslänge, der Wischblattvorrichtung. Unter "im Wesentlichen über eine gesamte Länge" soll insbesondere verstanden werden, dass sich ein Element über zumindest 75 %, bevorzugt über zumindest 90 % der Bezugslänge erstreckt. Es ist denkbar, dass die Wischblattvorrichtung eine Vielzahl, insbesondere zumindest zwei Fixierungselemente, aufweist. Im Falle von zumindest zwei Fixierungselementen ist zumindest ein Fixierungselement auf gegenüberliegenden Seiten der Wischleisteneinheit entlang ihrer Haupterstreckungsrichtung angeordnet.

Alternativ oder zusätzlich wäre denkbar, dass die Wischblattvorrichtung zumindest acht Fixierungselemente umfasst, wobei die zumindest acht Fixierungselemente vorzugsweise in einem montierten Zustand in periodischen Abständen auf einer Seite in Wischrichtung an der Wischleisteneinheit angeordnet sind. Vorzugsweise umfasst die Wischblattvorrichtung zumindest acht weitere Fixierungselemente. Die zumindest acht weiteren Fixierungselemente sind über die gesamte Haupterstreckungslänge der Wischleisteneinheit verteilt. Die zumindest acht Fixierungselemente und die zumindest acht weiteren Fixierungselemente verteilen sich vorzugsweise jeweils in einem einer geraden Linie folgenden Muster von gleichbleibenden Abständen entlang der gesamten Haupterstreckungslänge der Wischleisteneinheit. Vorzugsweise umfasst die Wischblattvorrichtung gleich viele Fixierungselemente wie weitere Fixierungselemente. Vorzugsweise bilden das zumindest eine Fixierungselement und das zumindest eine weitere Fixierungselement jeweils in Wischrichtung exakt gegenüberliegende Paare aus. Unter "in Wischrichtung exakt gegenüberliegend" soll vorzugsweise verstanden werden, dass zwei Elemente auf einer Verbindungsgeraden parallel zur Wischrichtung angeordnet sind. Vorzugsweise ist jeweils ein Paar in einem Endbereich entlang der Haupterstreckungsrichtung der Wischleisteneinheit angeordnet. Es ist denkbar, dass die Paare in regelmäßigen Abständen entlang der kompletten Hauptersteckungsrichtung der Wischleisteneinheit angeordnet sind. Alternativ ist denkbar, dass die Paare aus einem Fixierungselement und einem weitere Fixierungselement in unregelmäßigen Abständen entlang der kompletten Hauptersteckungsrichtung der Wischleisteneinheit angeordnet sind. Denkbar ist, dass die Paare aus einem Fixierungselement und einem weiteren Fixierungselement sich versetzt gegenüberliegen. Unter "sich versetzt gegenüberliegen" soll vorzugsweise verstanden werden, dass ein Fixierungselement und ein weiteres Fixierungselement eine Verbindungsgerade aufweisen, welche von einer geraden, die parallel zur Wischrichtung verläuft, verschieden ist. Vorzugsweise ist zumindest ein weiteres Fixierungselement auf einer Geraden angeordnet, welche parallel zur Wischrichtung durch einen Mittelpunkt des Abstandes zwischen zwei benachbarten Fixierungselementen verläuft. Vorzugsweise ist zumindest ein Fixierungselement auf einer Geraden angeordnet, welche parallel zur Wischrichtung durch einen Mittelpunkt des Abstandes zwischen zwei benachbarten weiteren Fixierungselementen verläuft. Dadurch kann vorteilhaft ein leises Wischen durch erhöhte Stabilisation der Wischleisteneinheit entlang ihrer Haupterstreckungsrichtung gewährleistet werden. Vorteilhaft kann dadurch ein leises Wischen durch erhöhte Stabilisation der Wischleisteneinheit bei vorteilhaft geringem Materialaufwand gewährleistet werden.

Des Weiteren wird vorgeschlagen, dass das zumindest eine Fixierungselement einstückig mit der Windabweisereinheit ausgebildet ist. Vorteilhaft ist das zumindest eine Fixierungselement einsteilig mit der Windabweisereinheit ausgebildet. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Dadurch kann das zumindest eine Fixierungselement vorteilhaft von außen zu einer Reparatur und/oder Montage zugänglich angeordnet werden. Dadurch kann vorteilhaft die Wischlippe stabilisiert werden und ein leises Wischen ermöglicht werden.

Des Weiteren wird vorgeschlagen, dass das zumindest eine Fixierungselement in einem montierten Zustand zumindest teilweise von einem Teilelement der zumindest einen Wischleisteneinheit umschlossen ist. Vorzugsweise ist das zumindest eine Fixierungselement in einem montierten Zustand zumindest teilweise von der zumindest einen Wischleisteneinheit umschlossen. Vorzugsweise ist die im demontierten Zustand freie Außenfläche des Fixierungselementes in einem montierten Zustand von einem Teilelement der zumindest einen Wischleisteneinheit zumindest teilweise umschlossen. Vorzugsweise ist das zumindest eine Fixierelement in die Wischleisteneinheit integriert. Dadurch kann insbesondere eine vorteilhaft einfache Montage der Wischblattvorrichtung erreicht werden. Vorteilhaft kann die Wischlippe punktuell stabilisiert werden und ein leises Wischen ermöglicht werden. Vorteilhaft kann die Wischlippe durch mechanisches Verformen in einer Position fest fixiert werden.

Die erfindungsgemäße Ausgestaltung der Wischblattvorrichtung umfasst zumindest ein Bügelelement, an welchem das zumindest eine Fixierungselement angeordnet ist, wobei das Bügelelement, zu einer zumindest teilweisen Einfassung der zumindest einen Wischleisteneinheit und/oder der zumindest einen Windabweisereinheit vorgesehen ist. Unter einem "Bügelelement" soll vorzugsweise ein Element verstanden werden, welches zu einem Umgreifen zumindest eines weiteren Teils der Wischblattvorrichtung vorgesehen ist. Vorzugsweise umfasst das zumindest eine Bügelelement zumindest zwei Bügelschenkel. Unter einem "Bügelschenkel" soll vorzugsweise ein Teilelement des zumindest einen Bügelelements verstanden werden, welches dazu vorgesehen ist eine Seite der Wischleisteneinheit und/oder der zumindest einen Windabweisereinheit, insbesondere kontaktierend, zu umgreifen. Vorzugsweise sind die zumindest zwei Bügelschenkel verbunden ausgebildet. Vorzugsweise sind die zumindest zwei Bügelschenkel einstückig, insbesondere einteilig ausgebildet. Denkbar ist, dass das zumindest eine Bügelelement mehrteilig, insbesondere aus mehreren Materialien, ausgebildet ist. Vorzugsweise ist die zumindest eine Wischleisteneinheit in einem montierten Zustand von dem Bügelelement umschlossen. Vorzugsweise liegt das Bügelelement im montierten Zustand zumindest teilweise an der zumindest einen Wischleisteneinheit an. Vorzugsweise liegt das Bügelelement im montierten Zustand zumindest teilweise an der zumindest einen Federschiene, insbesondere an zwei Federschienen, an. Vorzugsweise liegt das Bügelelement im montierten Zustand zumindest teilweise an der Windabweisereinheit an. Vorzugsweise ist die Wischleisteneinheit in einem montierten Zustand auf einer der Wischlippe zugewandten Seite frei von dem zumindest einen Bügelelement ausgebildet. Vorzugsweise ist an einem der zumindest zwei Bügelschenkel zumindest ein Fixierungselement angeordnet. Vorzugsweise ist an einem weiteren der zumindest zwei Bügelschenkel zumindest ein weiteres Fixierungselement angeordnet. Vorzugsweise sind die Fixierungselemente auf einer Innenseite des zumindest einen Bügelelements, insbesondere der Bügelschenkel, angeordnet. Vorzugsweise weisen die Fixierungselemente, welche an einem Bügelelement angeordnet sind, einen im Wesentlichen dreieckigen Querschnitt auf, entlang einer Ebene, welche im montierten Zustand senkrecht zur Haupterstreckungsrichtung der Wischleisteneinheit verläuft. Das zumindest eine Fixierungselement und/oder das zumindest eine weitere Fixierungselement ist/sind dazu vorgesehen eine Verbindung durch einen Formschluss via Verformung der Wischleisteneinheit des Bügelelements mit der Wischleisteneinheit auszubilden. Es ist denkbar, dass sich das zumindest eine Bügelelement zumindest im Wesentlichen über die gesamte Haupterstreckungslänge der Wischblattvorrichtung erstreckt. Vorzugsweise ist das zumindest eine Fixierungselement und/oder das zumindest eine weitere Fixierungselement einstückig mit dem zumindest einen Bügelelement ausgebildet.

Es ist ebenfalls denkbar, dass die Wischblattvorrichtung zumindest ein weiteres Bügelelement umfasst, an welchem zumindest ein Fixierungselement und ein weiteres Fixierungselement angeordnet sind. Vorzugsweise umfasst die Wischblattvorrichtung zumindest zwei, bevorzugt zumindest vier, insbesondere genau vier, Bügelelemente. Vorzugsweise ist das zumindest eine weitere Bügelelement analog zu dem zumindest einen Bügelelement ausgebildet. Dadurch kann die Wischleisteneinheit besonders vorteilhaft stabil ausgebildet werden. Dadurch kann ein vorteilhaft leises Wischen durch erhöhte Stabilisation der Wischleisteneinheit durch eine Einrahmung mit der Windabweisereinheit gewährleistet werden.

Des Weiteren wird vorgeschlagen, dass das zumindest eine Bügelelement die zumindest eine Windabweisereinheit zumindest teilweise umgreift. Vorzugsweise liegt das Bügelelement im montierten Zustand zumindest teilweise an der zumindest einen Windabweisereinheit an. Vorzugsweise sind die zumindest zwei Bügelschenkel des zumindest einen Bügelelements zumindest teilweise an der Windabweisereinheit auf beiden Seiten in Wischrichtung, insbesondere anliegend, angeordnet. Vorzugsweise ist eine Außenkontur des Bügelelements in einem Querschnitt entlang einer Ebene, welche im montierten Zustand senkrecht zur Haupterstreckungsrichtung der Windabweisereinheit verläuft, windabweisend ausgebildet. Vorzugsweise entspricht die Form der Außenkontur des Bügelelements der Form der Außenkontur der Windabweisereinheit in einem Querschnitt entlang einer Ebene, welche im montierten Zustand senkrecht zur Haupterstreckungsrichtung der Wischleisteneinheit verläuft.

Das zumindest eine Bügelelement umfasst vorzugsweise zumindest ein Stabilisierungselement. Vorzugsweise weist das zumindest eine Stabilisierungselement einen im Wesentlichen dreieckigen Querschnitt auf, entlang einer Ebene, welche im montierten Zustand senkrecht zur Haupterstreckungsrichtung der Wischleisteneinheit verläuft. Die Stabilisierungselemente sind dazu vorgesehen einen Formschluss des Bügelelements mit der Windabweisereinheit auszubilden und das zumindest eine Bügelelement mit der Windabweisereinheit zu verbinden. Das zumindest eine Stabilisierungselement ist dazu vorgesehen eine Verbindung durch einen Formschluss via Verformung der Windabweisereinheit des Bügelelements mit der Windabweisereinheit auszubilden. Dadurch kann ein vorteilhaftes Wischen durch ununterbrochene Stabilisation der Wischleisteneinheit bei vorteilhaft unbeeinträchtigtem Anpressdruck gewährleistet werden. Dadurch kann der Anpressdruck, welcher aus der Aerodynamik der Wischblattvorrichtung, insbesondere Windabweisereinheit resultiert, durch das Bügelelement unterstützt werden.

Des Weiteren wird vorgeschlagen, dass das zumindest eine Fixierungselement als Klebeverbindung ausgebildet ist. Vorzugsweise ist das Fixierungselement, welches als Klebeverbindung ausgebildet ist, zwischen der zumindest einen Federschiene und der zumindest einen Wischleisteneinheit, insbesondere dem Wischgrundkörper, angeordnet. Denkbar ist, dass das Fixierungselement, welches als Klebeverbindung ausgebildet ist, zwischen der zumindest einen Wischlippe und dem zumindest einen Wischgrundkörper der Wischleisteneinheit angeordnet ist. Denkbar ist, dass das Fixierungselement, welches als Klebeverbindung ausgebildet ist, als ein Klebestreifen, insbesondere doppelseitig klebender Klebestreifen ausgebildet ist. Es ist ebenfalls denkbar, dass das Fixierungselement, welches als Klebeverbindung ausgebildet ist, als Flüssigklebermasse und/oder Klebegelmasse ausgebildet ist. Vorzugsweise ist das Fixierungselement, welches als Flüssigklebermasse und/oder Klebegelmasse ausgebildet ist in einem montierten Zustand an, insbesondere zwischen, dem Wischgrundkörper und der Wischlippe angeordnet. Vorzugsweise ist das Fixierungselement, welches als ein Klebestreifen ausgebildet ist an, insbesondere zwischen, dem Wischgrundkörper und der Federschiene angeordnet.

Des Weiteren wird vorgeschlagen, dass das zumindest eine Fixierungselement als zumindest ein Magnet ausgebildet ist. Das zumindest eine als ein Magnet ausgebildete Fixierungselement ist vorzugsweise in der Wischleisteneinheit, insbesondere in dem zumindest einen Wischgrundkörper, angeordnet. Vorzugsweise ist das zumindest eine Fixierungselement, welches als Magnet ausgebildet ist, an einer im montierten Zustand der Federschiene zugewandten Seite angeordnet.

Des Weiteren wird vorgeschlagen, dass das zumindest eine Fixierungselement als Zahnelement ausgebildet ist. Unter einem "Zahnelement" soll vorzugsweise ein Element verstanden werden, welches zumindest eine Spitze aufweist, die dazu vorgesehen ist in ein weiteres Element zu einem Formschluss durch Verformung des weiteren Elements gedrückt zu werden. Vorzugsweise ist ein als Zahnelement ausgebildetes Fixierungselement in einem montierten Zustand zumindest im Wesentlichen in einem anderen Element, insbesondere einem Teilelement der Wischleisteneinheit, angeordnet. Denkbar ist, dass das Zahnelement eine abgestumpfte Spitze, insbesondere, abgerundete Spitze, aufweist. Vorteilhaft ist der Wischgrundkörper und/oder die Wischlippe durch mehrmalige Montage eines als Zahnelement ausgebildetem Fixierungselements beschädigungsfrei weiterverwendbar ausgebildet. Vorzugsweise weist ein als Zahnelement ausgebildetes Fixierungselement, einen im Wesentlichen dreieckigen und/oder trapezförmigen Querschnitt auf, entlang einer Ebene, welche im montierten Zustand senkrecht zur Haupterstreckungsrichtung der Wischleisteneinheit verläuft. Unter einem "im Wesentlichen trapezförmigen Querschnitt" soll vorzugsweise eine Form verstanden werden, welche mit einem kleinsten Trapez, das die Fläche vollständig einschließt, eine geringere Flächeninhaltsdifferenz aufweist als mit einem kleinsten Rechteck, kleinsten Dreieck und/oder kleinsten Oval.

Des Weiteren wird vorgeschlagen, dass das zumindest eine Fixierungselement als Schienenelement ausgebildet ist. Unter einem "Schienenelement" soll ein Element verstanden werden, welches formschlüssig an einem Objekt anliegt und dieses Objekt in eine Position drückt. Vorzugsweise weicht die Position, in welche das Objekt von dem zumindest einen Schienenelement gedrückt wird von einer Position ab, die das Objekt zumindest aufgrund der Schwerkraft einnehmen würde, in Abwesenheit des Schienenelements. Vorzugsweise ist das als Schienenelement ausgebildete Fixierungselement einstückig, insbesondere einteilig, mit der Windabweisereinheit ausgebildet. Vorzugsweise drückt das als Schienenelement ausgebildete Fixierungselement die Wischleisteneinheit, insbesondere den Wischgrundkörper, zumindest teilweise zu einer Stabilisierung gegen die zumindest eine Federschiene.

Die erfindungsgemäße Wischblattvorrichtung soll hierbei nicht auf die oben beschriebene Anwendung und Ausführungsform beschränkt sein. Insbesondere kann die erfindungsgemäße Wischblattvorrichtung zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind sechs Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Wischblattvorrichtung in einer schematischen Draufsicht,
- Fig. 2: eine erfindungsgemäße Wischblattvorrichtung in einer Explosionsdarstellung,
- Fig. 3: eine schematische Schnittdarstellung der erfindungsgemäßen Wischblattvorrichtung in einer Schnittebene III-III,
- Fig. 4: eine schematische Schnittdarstellung einer alternativen Wischblattvorrichtung,
- Fig. 5: eine schematische Schnittdarstellung einer weiteren alternativen Wischblattvorrichtung,
- Fig. 6: eine schematische Schnittdarstellung einer weiteren alternativen Wischblattvorrichtung,
- Fig. 7: eine schematische Schnittdarstellung einer weiteren alternativen Wischblattvorrichtung,
- Fig. 8: eine schematische Schnittdarstellung einer weiteren alternativen Wischblattvorrichtung und
- Fig. 9: eine schematische Schnittdarstellung einer weiteren alternativen Wischblattvorrichtung.

### Beschreibung der Ausführungsbeispiele

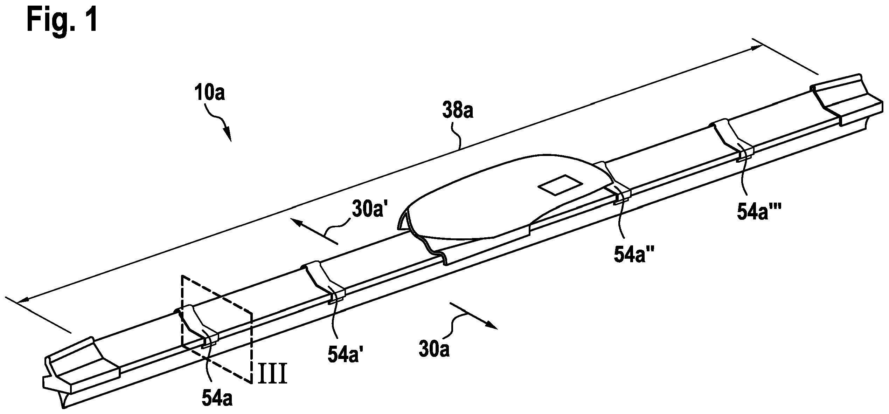

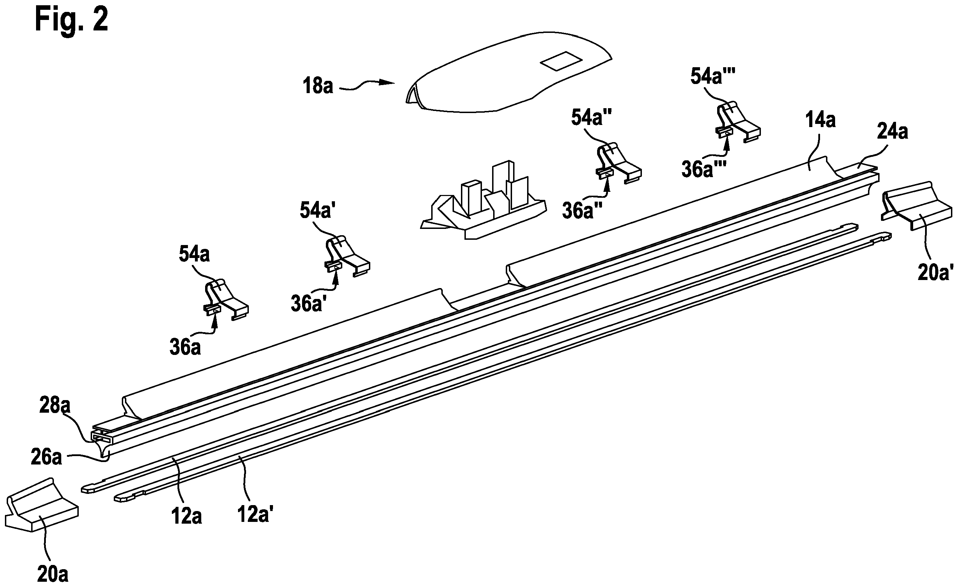

Eine Wischblattvorrichtung 10a ist im montierten Zustand in Figur 1 und in einer Explosionsdarstellung in Figur 2 gezeigt.

Die Wischblattvorrichtung 10a umfasst zumindest eine Wischleisteneinheit 22a.

Die Wischleisteneinheit 22a umfasst zumindest ein erstes Teilelement, insbesondere einen Wischgrundkörper 24a, und zumindest eine Wischlippe 26a. Der Wischgrundkörper 24a und die Wischlippe 26a sind verbunden, insbesondere einteilig, ausgebildet. Die einzelnen Bauteile der Wischblattvorrichtung 10a sind in einer Explosionsdarstellung in Figur 2 gezeigt. Die Wischblattvorrichtung 10a umfasst zumindest eine, insbesondere genau zwei, Federschienen 12a, 12a'. Der Wischgrundkörper 24a der Wischleisteneinheit 22a bildet zwei Federschienenaufnahmen 28a aus. Die Federschienenaufnahmen 28a sind jeweils von außenliegenden Nuten gebildet. Die Federschienenaufnahmen 28a sind zu einer Aufnahme der zwei Federschienen 12a, 12a' ausgebildet. Die Wischblattvorrichtung 10a weist eine Windabweisereinheit 14a auf. Die Windabweisereinheit 14a umfasst zwei Windabweiserteilkomponenten 16a. Auf einer der Wischlippe 26a abgewandten Seite des Wischgrundkörpers 24a ist die Windabweisereinheit 14a angeordnet. Die Windabweisereinheit 14a bildet einen Spoiler der Wischblattvorrichtung 10a aus. Die Windabweisereinheit 14a ist einstückig mit der Wischleisteneinheit 22a ausgebildet. Die Windabweisereinheit 14a und die Wischleisteneinheit 22a sind beispielhaft gemeinsam in einem Mehrkomponentenextrusionsverfahren hergestellt. Die Windabweisereinheit 14a und die Wischleisteneinheit 22a bestehen aus verschiedenen Materialien. Grundsätzlich wäre jedoch auch denkbar, dass die Windabweisereinheit 14a und die Wischleisteneinheit 22a aus demselben Material bestehen. Die Wischblattvorrichtung 10a weist einen Wischblattadapter 18a auf. Der Wischblattadapter 18a ist zu einer Kopplung der Wischblattvorrichtung 10a mit einem Wischarm vorgesehen. Der Wischblattadapter 18a ist fest mit der Wischleisteneinheit 22a, insbesondere dem Wischgrundkörper 24a der Wischleisteneinheit 22a, verbunden. Die Wischblattvorrichtung 10a umfasst zwei Wischblattendkappen 20a.

Die Wischblattendkappen 20a, 20a' sind im montierten Zustand an den Enden einer Haupterstreckung 38a der Wischblattvorrichtung 10a angeordnet. Die Wischblattendkappen 20a, 20a' sind in einem montierten Zustand in gegenüberliegenden Endbereichen der Federschienen 12a, 12a' mit den Federschienen 12a, 12a' verrastet.

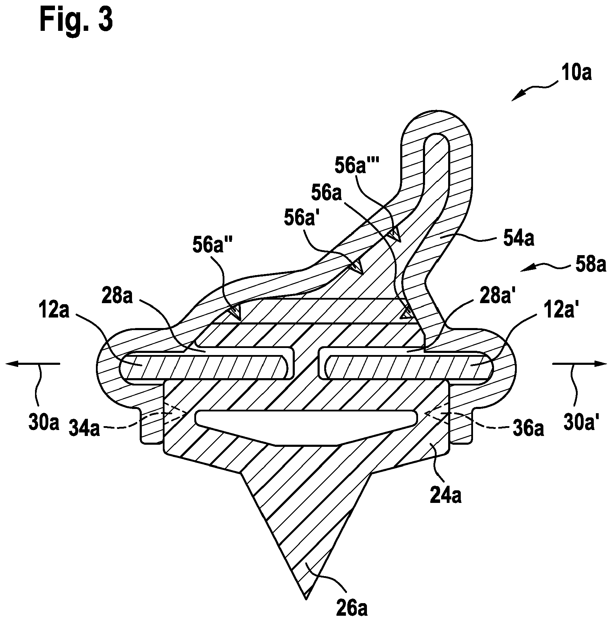

Die Wischblattvorrichtung 10a umfasst zumindest ein Bügelelement 54a. Die Wischblattvorrichtung 10a umfasst mehrere Bügelelemente 54a. Die Wischblattvorrichtung 10a umfasst beispielhaft genau vier Bügelelemente 54a. Die Bügelelemente 54a, 54a`, 54a", 54a‴ sind zu einer zumindest teilweisen Einfassung der zumindest einen Wischleisteneinheit 22a und/oder der zumindest einen Windabweisereinheit 14a vorgesehen. Die Bügelelemente 54a, 54a', 54a", 54a‴ umgreifen jeweils die Wischleisteneinheit 22a zumindest teilweise. Die Wischlippe 26a und die der Wischlippe 26a zugewandte Seite des Wischgrundkörpers 24a sind frei von einer Umfassung durch die Bügelelemente 54a, 54a', 54a", 54a‴ ausgebildet. Die Bügelelemente 54a, 54a', 54a", 54a‴ umgreifen den Wischgrundkörper 24a teilweise. Die Bügelelemente 54a, 54a', 54a", 54a‴ umgreifen die Seiten in Wischrichtung 30a des Wischgrundkörpers 24a teilweise. Die Bügelelemente 54a, 54a', 54a", 54a‴ liegen in beide Wischrichtungen 30 an der Wischleisteneinheit 22a an. Die Bügelelemente 54a, 54a', 54a", 54a‴ liegen jeweils an den Federschienen 12a, 12a' an den Seiten der Federschienen 12a, 12a' in Wischrichtung 30a, 30a' an. Die Bügelelemente 54a, 54a', 54a", 54a‴ liegen formschlüssig an der Windabweisereinheit 14a an. Die Bügelelemente 54a, 54a', 54a", 54a‴ umgreifen jeweils senkrecht zu einer Haupterstreckungsrichtung der Wischblattvorrichtung 10a die Windabweisereinheit 14a, die Federschienen 12a, 12a' und zumindest teilweise die Wischleisteneinheit 22a. Die Bügelelemente 54a, 54a`, 54a", 54a‴ sind jeweils dazu vorgesehen, die Federschienen 12a, 12a' in den Federschienenaufnahmen 28a der Wischleisteneinheit 22a zu fixieren. Die Bügelelemente 54a, 54a', 54a", 54a‴ umfassen jeweils zumindest ein, insbesondere vier, Stabilisierungselement/e 56a, 56a', 56a", 56a‴. Die Stabilisierungselemente 56a, 56a', 56a", 56a‴ sind zu einer Reduzierung eines Spiels zwischen den Bügelelementen 54a, 54a`, 54a", 54a‴ und der Windabweisereinheit 14a dazu vorgesehen, einen durch Verformung der Windabweisereinheit 14a erzeugten Formschluss zwischen der Windabweisereinheit 14a und dem jeweiligen Bügelelement 54a, 54a', 54a", 54a‴ herzustellen. Die Stabilisierungselemente 56a, 56a', 56a",56a‴, weisen einen im Wesentlichen dreieckigen Querschnitt III-III auf. Die Stabilisierungselemente 56a, 56a', 56a",56a‴ sind jeweils von kegelförmigen Spitzen gebildet. Die Stabilisierungselemente 56a, 56a', 56a", 56a‴ verformen die Windabweisereinheit 14a lokal durch ein Eindrücken in die Windabweisereinheit 14a. Die Stabilisierungselemente 56a, 56a', 56a", 56a‴ halten die Bügelelemente 54a, 54a', 54a", 54a‴ auf der Windabweisereinheit 14a in der montierten Position durch ein Eindrücken in die Windabweisereinheit 14a. Die die Bügelelemente 54a, 54a', 54a", 54a‴ der Wischblattvorrichtung 10a sind jeweils identisch ausgebildet (vgl. Fig. 3).

Ein mittiger Bereich 32a des Wischgrundkörpers 24a entlang seiner Haupterstreckung 38a ist frei von einem Bügelelement 54a, 54a', 54a", 54a‴ und einer Windabweisereinheit 14a ausgebildet (Fig. 1 und 2). Der mittige Bereich 32a, welcher frei von einem Bügelelement 54a, 54a', 54a", 54a‴ und einer Windabweisereinheit 14a ausgebildet ist, ist zur Aufnahme des Wischblattadapters 18a vorgesehen (Fig. 1 und 2).

Die Wischblattvorrichtung 10a umfasst zumindest ein von den Federschienen 12a, 12a' verschieden ausgebildetes Fixierungselement 34a. Die Wischblattvorrichtung 10a umfasst mehrere Fixierungselemente 34a. Die Wischblattvorrichtung 10a umfasst beispielhaft genau vier Fixierungselement 34a, wovon lediglich eines in Figur 3 sichtbar ist. Die Wischblattvorrichtung 10a umfasst zumindest ein von den Federschienen 12a, 12a' verschieden ausgebildetes weiteres Fixierungselement 36a, 36a', 36a", 36a‴. Die Wischblattvorrichtung 10a umfasst mehrere weitere Fixierungselemente 36a, 36a', 36a", 36a‴. Die Wischblattvorrichtung 10a umfasst beispielhaft genau vier weitere Fixierungselement 36a, 36a', 36a", 36a‴, wovon lediglich eines in Figur 3 sichtbar ist. Die Fixierungselemente 34a sind in einem Bereich zwischen der Wischlippe 26a und der zumindest einen Federschiene 12a, 12a' angeordnet. Die weiteren Fixierungselemente 36a, 36a', 36a", 36a‴ sind in einem Bereich zwischen der Wischlippe 26a und der zumindest einen Federschiene 12a, 12a' angeordnet. Die Fixierungselemente34a und die weiteren Fixierungselemente 36a, 36a', 36a", 36a‴ sind jeweils an dem Bügelelement 54a, 54a', 54a", 54a‴ angeordnet. Die Fixierungselemente 34a und die weiteren Fixierungselemente 36a, 36a', 36a", 36a‴ sind jeweils einstückig mit dem Bügelelement 54a, 54a', 54a", 54a‴ verbunden. Es ist jeweils ein Fixierungselement 34a und ein weiteres Fixierungselement 36a, 36a', 36a", 36a‴ an jedem der Bügelelemente 54a, 54a', 54a", 54a‴ angeordnet. Die Fixierungselemente 34a und die weiteren Fixierungselemente 36a, 36a', 36a", 36a‴ sind jeweils an gegenüberliegenden freien Enden der Bügelelemente 54a, 54a', 54a", 54a‴ angeordnet. In Figur 2 sind vier weitere Fixierungselemente 36a, 36a', 36a", 36a‴ an den Bügelelementen 54a, 54a`, 54a", 54a‴ gezeigt. Die Fixierungselemente 34a und die weiteren Fixierungselemente 36a, 36a', 36a", 36a‴ stehen jeweils an einer Innenseite von dem jeweiligen Bügelelement 54a, 54a', 54a", 54a‴ ab. Die Fixierungselemente 34a und die weiteren Fixierungselemente 36a, 36a', 36a", 36a‴ sind beispielhaft von kegelförmigen Spitzen gebildet.

Die Fixierungselemente 34a sind in einem montierten Zustand zumindest zu einer Reduzierung eines Spiels der zumindest einen Wischleisteneinheit 22a gegenüber der Windabweisereinheit 14a und/oder den Federschienen 12a, 12a' und/oder zumindest eines Teilelements der Wischleisteneinheit 22a gegenüber der zumindest einen Wischlippe 26a dazu vorgesehen, einen magnetischen Kraftschluss, einen Stoffschluss, einen durch Verformung der Wischleisteneinheit 22a erzeugten Formschluss zwischen der Wischleisteneinheit 22a und der Windabweisereinheit 14a und/oder den Federschienen 12a, 12a' herzustellen. Die Fixierungselemente 34a sind in einem montierten Zustand zumindest zu einer Reduzierung eines Spiels der Wischleisteneinheit 22a gegenüber den Federschienen 12a, 12a' dazu vorgesehen, einen durch Verformung der Wischleisteneinheit 22 erzeugten Formschluss zwischen der Wischleisteneinheit 22a und den Federschienen 12a, 12a' herzustellen. Die Fixierungselemente 34a sind an einer Seite in Wischrichtung 30a an der maximalen Erstreckung der Wischleisteneinheit 22a angeordnet. An den Bereichen der Bügelelemente 54a, 54a', 54a", 54a‴, welche im montierten Zustand an der Wischleisteneinheit 22a in Wischrichtung 30a anliegen, sind jeweils die Fixierungselemente 34a und die weiteren Fixierungselemente 36a, 36a', 36a", 36a‴ angeordnet. Die Fixierungselemente 34a ragen in einem montierten Zustand teilweise in den Wischgrundkörper 24b der Wischleisteneinheit 22a.

Die weiteren Fixierungselemente 36a, 36a', 36a", 36a‴ sind in einem montierten Zustand zumindest zu einer Reduzierung eines Spiels der zumindest einen Wischleisteneinheit 22a gegenüber der Windabweisereinheit 14a und/oder den Federschienen 12a, 12a' und/oder zumindest eines Teilelements der Wischleisteneinheit 22a gegenüber der zumindest einen Wischlippe 26a dazu vorgesehen, einen magnetischen Kraftschluss, einen Stoffschluss, einen durch Verformung der Wischleisteneinheit 22a erzeugten Formschluss zwischen der Wischleisteneinheit 22a und der Windabweisereinheit 14a und/oder den Federschienen 12a, 12a' herzustellen. Die weiteren Fixierungselemente 36a, 36a', 36a", 36a‴ sind in einem montierten Zustand zumindest zu einer Reduzierung eines Spiels der Wischleisteneinheit 22a gegenüber den Federschienen 12a, 12a' dazu vorgesehen, einen durch Verformung der Wischleisteneinheit 22a erzeugten Formschluss zwischen der Wischleisteneinheit 22a und den Federschienen 12a, 12a' herzustellen. Das weitere Fixierungselement 36a, 36a', 36a", 36a‴ fixiert die Wischleisteneinheit 22a analog zu den Fixierungselementen 34a. Die weiteren Fixierungselemente 36a, 36a', 36a", 36a‴ sind auf einer relativ zu den Fixierungselementen 34a gegenüberliegenden Seite der Wischleisteneinheit 22a angeordnet. Die weiteren Fixierungselemente 36a, 36a', 36a", 36a‴ ragen in einem montierten Zustand teilweise in den Wischgrundkörper 24b der Wischleisteneinheit 22a. Die Fixierungselemente 34a und die weiteren Fixierungselemente 36a, 36a', 36a", 36a‴ sind jeweils in einem montierten Zustand zumindest teilweise von dem Wischgrundkörper 24b der zumindest einen Wischleisteneinheit 22a umschlossen. Die Fixierungselemente 34a und die weiteren Fixierungselemente 36a, 36a', 36a", 36a‴ sind einstückig mit den Bügelelementen 54a, 54a`, 54a", 54a‴ ausgebildet.

Es sind verschiedene Anzahlen und Anordnungen der Fixierungselemente 34a und der weiteren Fixierungselemente 36a, 36a', 36a", 36a‴ denkbar. Es ist denkbar, dass die Wischblattvorrichtung 10a eine Vielzahl, beispielsweise jeweils zumindest acht Fixierungselemente 34a und zumindest acht weitere Fixierungselemente 36a, 36a', 36a", 36a‴, aufweist, welche sich über im Wesentlichen die gesamte Haupterstreckung 38a der Wischblattvorrichtung 10a erstrecken. In diesem Falle von zumindest acht Fixierungselementen 34a ist zumindest ein Fixierungselement 34a in jedem der beiden Endbereiche der Wischleisteneinheit 22a entlang ihrer Haupterstreckungsrichtung angeordnet. Die zumindest acht Fixierungselemente 34a sind in einem montierten Zustand in periodischen Abständen auf einer Seite in einer Wischrichtung 30a, 30a' an der Wischleisteneinheit 22a angeordnet. In diesem Fall von zumindest acht weiteren Fixierungselementen 36a, 36a', 36a", 36a‴ ist zumindest ein weiteres Fixierungselement 36a, 36a', 36a", 36a‴ in jedem der beiden Endbereiche der Wischleisteneinheit 22a entlang ihrer Haupterstreckung 38a angeordnet. Die zumindest acht weiteren Fixierungselemente 36a, 36a', 36a", 36a‴ sind in einem montierten Zustand in periodischen Abständen auf einer Seite in einer Wischrichtung 30a, 30a' an der Wischleisteneinheit 22a angeordnet. Die zumindest acht Fixierungselemente 34a und die zumindest acht weiteren Fixierungselemente 36a, 36a', 36a", 36a‴ verteilen sich vorzugsweise jeweils in einem einer geraden Linie folgenden Muster von gleichbleibenden Abständen entlang der gesamten Haupterstreckung 38a der Wischleisteneinheit 22a. Es sind verschiedene Anordnungen für Verteilungen von zumindest acht Fixierungselementen 34a und zumindest acht weiteren Fixierungselementen 36a, 36a`, 36a", 36a‴ entlang der Haupterstreckung 38a der Wischleisteneinheit 22a denkbar.

In einer Anordnung wäre denkbar, dass sich jeweils genau ein Fixierungselement 34a und ein weiteres Fixierungselement 36a, 36a', 36a", 36a‴ gegenüberliegen. Dabei wäre insbesondere denkbar, dass die Fixierungselemente 34a und die weiteren Fixierungselement 36a, 36a', 36a", 36a‴ jeweils mit einem kleinen Intervall, insbesondere von 1 bis 25 mm, nebeneinander und jeweils sich gegenüberliegen. Ferner wäre insbesondere denkbar, dass die Fixierungselemente 34a und die weiteren Fixierungselemente 36a, 36a', 36a", 36a‴ jeweils mit einem mittleren Intervall, insbesondere von 25 bis 50 mm, nebeneinander und jeweils sich gegenüberliegen. Des Weiteren wäre insbesondere denkbar, dass die Fixierungselemente 34a und die weiteren Fixierungselement 36a, 36a', 36a", 36a‴a jeweils mit einem großen Intervall, insbesondere von 50 bis 75 mm, nebeneinander und jeweils sich gegenüberliegen. Zudem wäre insbesondere denkbar, dass die Fixierungselemente 34a und die weiteren Fixierungselemente 36a, 36a', 36a", 36a‴ jeweils mit einem großen Intervall, insbesondere von 75 bis 100 mm, nebeneinander und jeweils sich gegenüberliegen.

Ferner wäre insbesondere denkbar, dass die Fixierungselemente 34a und die weiteren Fixierungselemente 36a, 36a', 36a", 36a‴ jeweils mit einem Intervall, insbesondere von 1 bis 50 mm, nebeneinander angeordnet sind, wobei die Fixierungselemente 34a gegenüber den weiteren Fixierungselementen 36a, 36a', 36a", 36a‴ alternierend angeordnet sind. Des Weiteren wäre insbesondere denkbar, dass die Fixierungselemente 34a und die weiteren Fixierungselemente 36a, 36a', 36a", 36a‴ jeweils mit einem Intervall, insbesondere von 50 bis 100 mm, nebeneinander angeordnet sind, wobei die Fixierungselemente 34a gegenüber den weiteren Fixierungselementen 36a, 36a', 36a", 36a‴ alternierend angeordnet sind.

Es ist denkbar, dass sich das Bügelelement 54a, 54a', 54a", 54a‴ und/oder das zumindest eine weitere Bügelelement 54a, 54a', 54a", 54a‴ zumindest im Wesentlichen über die gesamte Haupterstreckung 38a der Wischblattvorrichtung 10a erstrecken. In einer weiteren denkbaren Ausführungsvariante ist das zumindest eine Fixierungselement 34a und/oder das zumindest eine weitere Fixierungselement 36a, 36a', 36a", 36a‴ an dem Bügelelement 54a, 54a', 54a", 54a‴ und dem weiteren Bügelelement 54a, 54a', 54a", 54a‴ als Klebeverbindung ausgebildet. In einer weiteren denkbaren Ausführungsvariante erstrecken sich das Fixierungselement 34a und/oder das weitere Fixierungselement 36a, 36a', 36a", 36a‴ über eine gesamte Erstreckung des Bügelelements 54a, 54a', 54a", 54a‴, wobei sich das Bügelelement 54a, 54a', 54a", 54a‴ zumindest im Wesentlichen über die gesamte Haupterstreckung 38a der Wischblattvorrichtung 10a erstreckt.

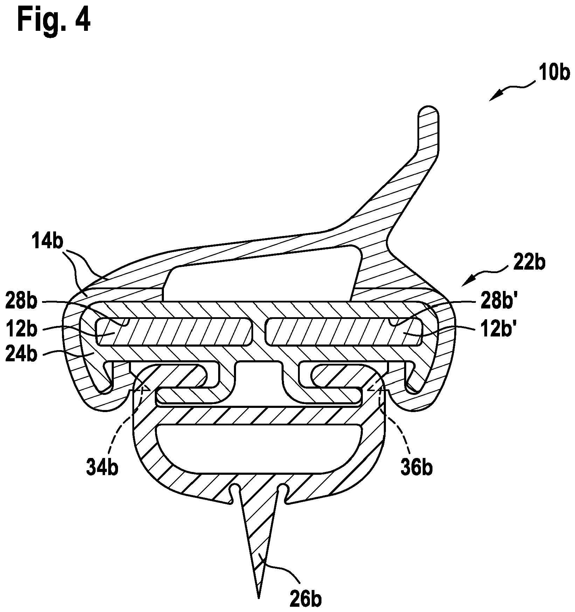

In den Figuren 4 bis 9 sind sechs weitere Ausführungsbeispiele gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 9 ist der Buchstabe a durch die Buchstaben b bis g ersetzt.

In Figur 4 ist eine Wischblattvorrichtung 10b im Querschnitt III-III gezeigt. Die Wischblattvorrichtung 10b weist eine Wischleisteneinheit 22b auf. Die Wischleisteneinheit 22b umfasst ein erstes Teilelement, insbesondere einen Wischgrundkörper 24b, und eine Wischlippe 26b. Die Wischlippe 26b weist einen dämpfenden Längskanal auf. Die Wischleisteneinheit 22b ist zweiteilig ausgebildet. Der Wischgrundkörper 24b und die Wischlippe 26b sind als separate Bauteil ausgebildet. Der Wischgrundkörper 24b und die Wischlippe 26b sind in einem montierten Zustand formschlüssig verbunden. Die Wischlippe 26b weist auf einer dem Wischgrundkörper 24b zugewandten Seite eine T-Nut auf, welche sich entlang einer Haupterstreckungsrichtung der Wischlippe 26b über die gesamte Wischlippe 26b erstreckt. Der Wischgrundkörper 24b weist auf einer Wischlippe 26b zugewandten Seite zwei in entgegengesetzte Richtungen weisende L-förmige Fortsätze auf, welche sich jeweils entlang einer Haupterstreckungsrichtung des Wischgrundkörpers 24b über den gesamte Wischgrundkörper 24b erstrecken. In einem montierten Zustand greifen die L-förmigen Fortsätze des Wischgrundkörpers 24b in die T-Nut der Wischlippe 26b ein und beide Teile bilden zusammen die Wischleisteneinheit 22b. Die Wischblattvorrichtung 10b umfasst zwei Federschienen 12b, 12b'. Der Wischgrundkörper 24b der Wischleisteneinheit 22b bildet zwei Federschienenaufnahmen 28b aus. Die Federschienenaufnahmen 28b sind jeweils von innenliegenden, materiell umschlossenen Kanälen gebildet. Die Federschienenaufnahmen 28b sind zu einer Aufnahme der zwei Federschienen 12b, 12b' ausgebildet. Die Wischblattvorrichtung 10b weist eine Windabweisereinheit 14b auf. Die Windabweisereinheit 14b ist auf einer der Wischlippe 26b abgewandten Seite des Wischgrundkörpers 24b angeordnet. Die Windabweisereinheit 14b bildet einen Spoiler der Wischblattvorrichtung 10b aus. Die Windabweisereinheit 14b weist einen Spoilerbereich und einen Befestigungsbereich auf. Der Spoilerbereich und der Befestigungsbereich sind aus verschiedenen Materialien hergestellt. Die Windabweisereinheit 14b ist zumindest teilweise aus einem Elastomer und zumindest teilweise aus einem Thermoplast ausgebildet. Spoilerbereich und der Befestigungsbereich sind in einem Mehrkomponentenextrusionsverfahren hergestellt. Die Windabweisereinheit 14b umgreift in dem Befestigungsbereich den Wischgrundkörper 24b der Wischleisteneinheit 22b. Die Windabweisereinheit 14b umgreift in dem Befestigungsbereich den Wischgrundkörper 24b der Wischleisteneinheit 22b bis zu der Wischlippe 26b hin, wobei die beiden freien Enden der Windabweisereinheit 14b auf gegenüberliegenden Seiten an der Wischlippe 26 angeordnet sind.

Die Wischblattvorrichtung 10b umfasst zumindest ein von den Federschienen 12b, 12b' verschieden ausgebildetes Fixierungselement 34b. Die Wischblattvorrichtung 10b umfasst mehrere Fixierungselemente 34b. Die Wischblattvorrichtung 10b umfasst zumindest ein von den Federschienen 12b, 12b' verschieden ausgebildetes weiteres Fixierungselement 36b. Die Wischblattvorrichtung 10b umfasst mehrere weitere Fixierungselemente 36b. Die Fixierungselemente 34b sind an der Windabweisereinheit 14b angeordnet. Die Fixierungselemente 34b sind einstückig mit der Windabweisereinheit 14b ausgebildet. Die Fixierungselemente 34b sind entlang der Haupterstreckungsrichtung der Wischblattvorrichtung 10b verteilt an der Windabweisereinheit 14b angeordnet. Die Fixierungselemente 34b sind an einem freien Ende der Windabweisereinheit 14b in einem Bereich angeordnet, welcher an der Wischlippe 26b anliegt. Die Fixierungselemente 34b sind jeweils als Zahnelemente ausgebildet. Die Fixierungselemente 34b sind jeweils von einer kegelförmigen Spitze gebildet. Die weiteren Fixierungselemente 36b sind analog zu den Fixierungselementen 34b ausgebildet. Die weiteren Fixierungselemente 36b sind auf der gegenüberliegenden Seite in Wischrichtung 30b der Wischblattvorrichtung 10b angeordnet. Die Fixierungselemente 34b und die weiteren Fixierungselemente 36b verteilen sich in einer der möglichen Anordnungen gemäß dem ersten Ausführungsbeispiel über die gesamte Haupterstreckung 38b der Wischblattvorrichtung 10b. Vorzugsweise sind die Fixierungselemente 34b und die weiteren Fixierungselemente 36b jeweils mit einem Intervall nebeneinander angeordnet, wobei die Fixierungselemente 34b gegenüber den weiteren Fixierungselementen 36b alternierend angeordnet sind.

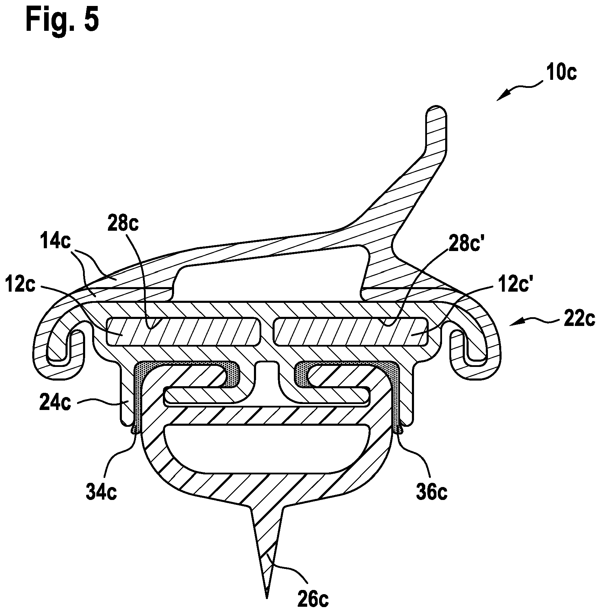

In Figur 5 ist eine Wischblattvorrichtung 10c im Querschnitt III-III gezeigt. Die Wischblattvorrichtung 10c weist eine Wischleisteneinheit 22c auf. Die Wischleisteneinheit 22c umfasst ein erstes Teilelement, insbesondere einen Wischgrundkörper 24c, und eine Wischlippe 26c. Die Wischlippe 26c weist einen dämpfenden Längskanal auf. Die Wischleisteneinheit 22c ist zweiteilig ausgebildet. Der Wischgrundkörper 24c und die Wischlippe 26c sind als separate Bauteile ausgebildet. Der Wischgrundkörper 24c und die Wischlippe 26c sind in einem montierten Zustand formschlüssig verbunden. Die Wischlippe 26c weist auf einer dem Wischgrundkörper 24c zugewandten Seite eine T-Nut auf, welche sich entlang einer Haupterstreckungsrichtung der Wischlippe 26c über die gesamte Wischlippe 26c erstreckt. Der Wischgrundkörper 24c weist auf einer der Wischlippe 26c zugewandten Seite zwei in entgegengesetzte Richtungen weisende L-förmige Fortsätze auf, welche sich jeweils entlang einer Haupterstreckungsrichtung des Wischgrundkörpers 24c über den gesamte Wischgrundkörper 24c erstrecken. In einem montierten Zustand greifen die L-förmigen Fortsätze des Wischgrundkörpers 24c in die T-Nut der Wischlippe 26c ein und beide Teile bilden zusammen die Wischleisteneinheit 22c. Zudem weist der Wischgrundkörpers 24c zwei Stege auf, welche sich auf beiden Seiten der Wischlippe 26c teilweise in Richtung der einen Reinigungskante erstrecken und die Wischlippe 26c zumindest teilweise umgreifen. Die Stege erstrecken sich jeweils entlang einer Haupterstreckungsrichtung des Wischgrundkörpers 24c über den gesamte Wischgrundkörper 24c. Die Wischblattvorrichtung 10c umfasst zwei Federschienen 12c, 12b'. Der Wischgrundkörper 24c der Wischleisteneinheit 22c bildet zwei Federschienenaufnahmen 28c aus. Die Federschienenaufnahmen 28c sind jeweils von innenliegenden, materiell umschlossenen Kanälen gebildet. Die Federschienenaufnahmen 28c sind zu einer Aufnahme der zwei Federschienen 12c, 12b' ausgebildet. Die Wischblattvorrichtung 10c weist eine Windabweisereinheit 14c auf. Die Windabweisereinheit 14c ist auf einer der Wischlippe 26c abgewandten Seite des Wischgrundkörpers 24c angeordnet. Die Windabweisereinheit 14c bildet einen Spoiler der Wischblattvorrichtung 10c aus. Die Windabweisereinheit 14c weist einen Spoilerbereich und einen Befestigungsbereich auf. Der Spoilerbereich und der Befestigungsbereich sind aus verschiedenen Materialien hergestellt. Die Windabweisereinheit 14c ist zumindest teilweise aus einem Elastomer und zumindest teilweise aus einem Thermoplast ausgebildet. Der Spoilerbereich und der Befestigungsbereich sind in einem Mehrkomponentenextrusionsverfahren hergestellt. Die Windabweisereinheit 14c umgreift in dem Befestigungsbereich den Wischgrundkörper 24c der Wischleisteneinheit 22c. Die Windabweisereinheit 14c umgreift in dem Befestigungsbereich den Wischgrundkörper 24c der Wischleisteneinheit 22c bis zu der Wischlippe 26c hin, wobei die beiden freien Enden der Windabweisereinheit 14c auf gegenüberliegenden Seiten an der Wischlippe 26c angeordnet sind.

Die Wischblattvorrichtung 10c umfasst zumindest ein von den Federschienen 12c, 12c' verschieden ausgebildetes Fixierungselement 34c. Die Wischblattvorrichtung 10c umfasst zumindest ein von den Federschienen 12c, 12c' verschieden ausgebildetes weiteres Fixierungselement 36c. Das Fixierungselement 34c ist zumindest teilweise an dem Wischgrundkörper 24c angeordnet. Das Fixierungselement 34c ist zumindest teilweise an der Wischlippe 26c angeordnet. Das Fixierungselement 34c ist als Klebeverbindung ausgebildet. Das Fixierungselement 34c ist als L-förmige Klebeverbindung zwischen dem Wischgrundkörper 24c und der Wischlippe 26c ausgebildet. Das Fixierungselement 34c ist in einem montierten Zustand zu einer Reduzierung eines Spiels der Wischleisteneinheit 22c gegenüber den Federschienen 12c, 12c' dazu vorgesehen, einen Stoffschluss zwischen der Wischleisteneinheit 22c und den Federschienen 12c, 12c' herzustellen. Das weitere Fixierungselement 36c ist als Klebeverbindung ausgebildet. Das weitere Fixierungselement 36c ist als L-förmige Klebeverbindung zwischen dem Wischgrundkörper 24c und der Wischlippe 26c ausgebildet. Das Fixierungselement 34c und das weitere Fixierungselement 36c ist als ausgehärteter Flüssigkleber und/oder Gel/Pastenkleber ausgebildet. Das weitere Fixierungselement 36c ist analog zu dem einen Fixierungselement 34c ausgebildet. Das weitere Fixierungselement 36c ist auf einer dem Fixierungselement 34c gegenüberliegenden Seite in Wischrichtung 30c der Wischblattvorrichtung 10c angeordnet. Das Fixierungselement 34c und das weitere Fixierungselement 36c können jeweils sowohl als flächige Klebungen über die gesamte Haupterstreckung 38c der Wischblattvorrichtung 10c, als auch von einzelnen Klebepunkte, welche über die Haupterstreckung 38c der Wischblattvorrichtung 10c verteilt sind, gebildet sein. Bei einzelnen Klebepunkten verteilen sich diese insbesondere gemäß einer der Anordnung des ersten Ausführungsbeispiels über die gesamte Haupterstreckung 38c der Wischblattvorrichtung 10c.

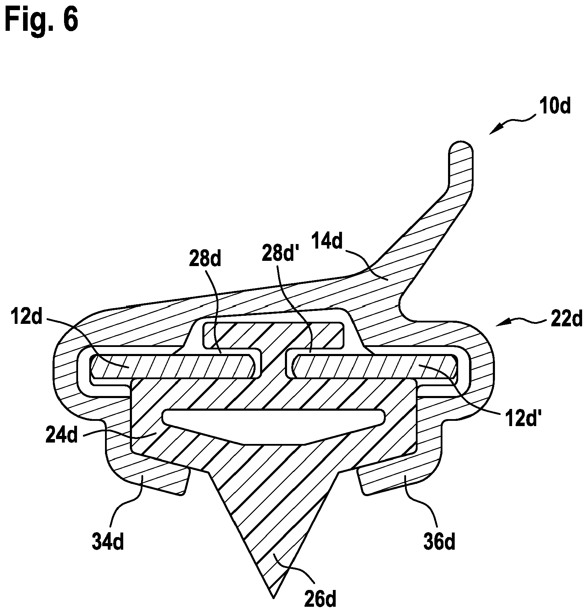

In Figur 6 ist eine weitere Ausführungsform einer Wischblattvorrichtung 10d im Querschnitt III-III gezeigt. Die Wischblattvorrichtung 10d umfasst zumindest eine Wischleisteneinheit 22d. Die Wischleisteneinheit 22d umfasst zumindest ein erstes Teilelement, insbesondere einen Wischgrundkörper 24d, und zumindest eine Wischlippe 26d. Der Wischgrundkörper 24d und die Wischlippe 26d sind verbunden, insbesondere einteilig, ausgebildet. Die Wischblattvorrichtung 10d umfasst zumindest eine, insbesondere genau zwei, Federschienen 12d, 12d'. Der Wischgrundkörper 24d der Wischleisteneinheit 22d bildet zwei Federschienenaufnahmen 28d aus. Die Federschienenaufnahmen 28d sind jeweils von außenliegenden Nuten gebildet. Die Federschienenaufnahmen 28d sind zu einer Aufnahme der zwei Federschienen 12d, 12d' ausgebildet. Die Wischblattvorrichtung 10d weist ferner eine Windabweisereinheit 14d auf. Auf einer der Wischlippe 26d abgewandten Seite des Wischgrundkörpers 24d ist die Windabweisereinheit 14d angeordnet. Die Windabweisereinheit 14d bildet einen Spoiler der Wischblattvorrichtung 10d aus. Die Windabweisereinheit 14d weist einen Spoilerbereich und einen Befestigungsbereich auf. Die Windabweisereinheit 14d umgreift in dem Befestigungsbereich den Wischgrundkörper 24d der Wischleisteneinheit 22d und die Federschienen 12d, 12d'. Die Windabweisereinheit 14d umgreift in dem Befestigungsbereich den Wischgrundkörper 24d der Wischleisteneinheit 22d bis zu der Wischlippe 26d hin, wobei die beiden freien Enden der Windabweisereinheit 14d auf gegenüberliegenden Seiten an der Wischlippe 26d anliegen.

Die Wischblattvorrichtung 10d umfasst zumindest ein von den Federschienen 12d, 12d' verschieden ausgebildetes Fixierungselement 34d. Die Wischblattvorrichtung 10d umfasst zumindest ein von den Federschienen 12d, 12d' verschieden ausgebildetes weiteres Fixierungselement 36d. Das Fixierungselement 34d ist an der Windabweisereinheit 14d angeordnet. Das Fixierungselement 34b ist an der Windabweisereinheit 14b in einem Bereich angeordnet, welcher in Wischrichtung 30d, 30d' und an einer der Wischlippe 26d zugewandten Seite des Wischgrundkörpers 24d an dem zumindest einem Wischgrundkörper 24d anliegt. Das Fixierungselement 34d ist an einem der freien Enden der Windabweisereinheit 14d angeordnet. Das Fixierungselement 34d ist als Schienenelement ausgebildet. Das Fixierungselement 34d weist einen im Wesentlichen L-förmigen Querschnitt III-III auf. Das Fixierungselement 34d ist in einem montierten Zustand zu einer Reduzierung eines Spiels der Wischleisteneinheit 22g gegenüber der Windabweisereinheit 14d dazu vorgesehen, einen durch Verformung der Wischleisteneinheit 22d, insbesondere der Wischlippe 26d, erzeugten Formschluss zwischen der Wischleisteneinheit 22d und der Windabweisereinheit 14d bzw. der Federschienen 12g, 12g' herzustellen. Das weitere Fixierungselement 36d weist ebenfalls einen im Wesentlichen L-förmigen Querschnitt III-III auf. Das weitere Fixierungselement 36d ist analog zu dem Fixierungselement 34d ausgebildet. Das weitere Fixierungselement 36d ist auf der gegenüberliegenden Seite in Wischrichtung 30d der Wischblattvorrichtung 10d angeordnet. Das Fixierungselement 34d und das weitere Fixierungselement 36d sind dazu vorgesehen, die Wischlippe 26d zu untergreifen und zumindest teilweise in Richtung der Federschienen 12d, 12d' zu drücken. Das Fixierungselement 34d und das weitere Fixierungselement 36d sind dazu vorgesehen, die Wischlippe 26d teilweise zu komprimieren. Das Fixierungselement 34d und das weitere Fixierungselement 36d erstrecken sich vorzugsweise jeweils über die gesamte Haupterstreckung 38d der Wischblattvorrichtung 10d. Es wäre jedoch auch denkbar, dass die Wischblattvorrichtung 10d mehrere identische Fixierungselemente 34d und weitere Fixierungselemente 36d aufweist, welche über die Haupterstreckung 38d der Wischblattvorrichtung 10d verteilt angeordnet sind. Bei mehreren Fixierungselementen 34d und weiteren Fixierungselementen 36d verteilen sich diese insbesondere gemäß einer der Anordnung des ersten Ausführungsbeispiels über die gesamte Haupterstreckung 38d der Wischblattvorrichtung 10d.

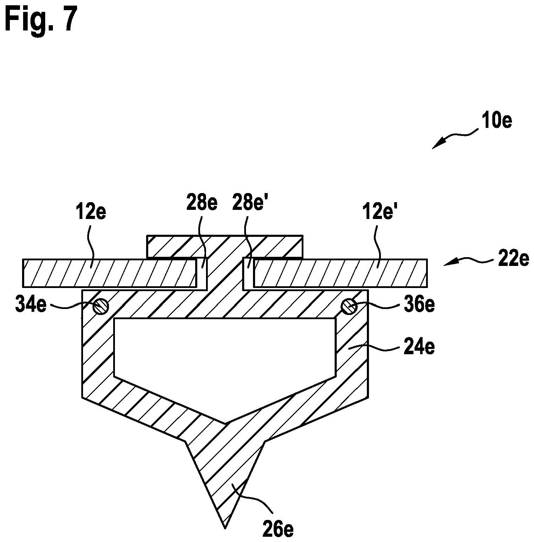

In Figur 7 ist eine weitere Ausführungsform einer Wischblattvorrichtung 10e im Querschnitt III-III gezeigt. Die Wischblattvorrichtung 10e umfasst zumindest eine Wischleisteneinheit 22e. Die Wischleisteneinheit 22e umfasst zumindest ein erstes Teilelement, insbesondere einen Wischgrundkörper 24e, und zumindest eine Wischlippe 26e. Der Wischgrundkörper 24e und die Wischlippe 26e sind verbunden, insbesondere einteilig, ausgebildet. Die Wischblattvorrichtung 10e umfasst zumindest eine, insbesondere genau zwei, Federschienen 12e, 12e'. Der Wischgrundkörper 24e der Wischleisteneinheit 22e bildet zwei Federschienenaufnahmen 28e aus. Die Federschienenaufnahmen 28e sind jeweils von außenliegenden Nuten gebildet. Die Federschienenaufnahmen 28e sind zu einer Aufnahme der zwei Federschienen 12e, 12e' ausgebildet. Die Wischblattvorrichtung 10e weist ferner eine nicht weiter dargestellte Windabweisereinheit 14e auf. Die Windabweisereinheit 14e umgreift in einem Befestigungsbereich den Wischgrundkörper 24e der Wischleisteneinheit 22e und die Federschienen 12e, 12e'. Grundsätzlich wäre jedoch auch eine andere einem Fachmann als sinnvoll erscheinende Befestigung der Federschienen 12e, 12e' an dem Wischgrundkörper 24e denkbar.

Die Wischblattvorrichtung 10e umfasst zumindest ein von den Federschienen 12e, 12e' verschieden ausgebildetes Fixierungselement 34e. Die Wischblattvorrichtung 10e umfasst zumindest ein von den Federschienen 12e, 12e' verschieden ausgebildetes weiteres Fixierungselement 36e. Das Fixierungselement 34e ist in dem Wischgrundkörper 24e angeordnet. Das zumindest eine Fixierungselement 34e ist in dem Wischgrundkörper 24e in einem Bereich angeordnet, welcher an einer den Federschienen 12e, 12e' zugewandten Seite des Wischgrundkörpers 24e liegt. Das zumindest eine Fixierungselement 34e ist als Magnet ausgebildet. Das Fixierungselement 34e weist einen im Wesentlichen kreisförmigen Querschnitt III-III auf. Das Fixierungselement 34e ist in einem montierten Zustand zu einer Reduzierung eines Spiels der zumindest einen Wischleisteneinheit 22e gegenüber den Federschienen 12e, 12e' dazu vorgesehen, einen magnetischen Kraftschluss zwischen der Wischleisteneinheit 22e und den Federschienen 12e, 12e' herzustellen. Das zumindest eine weitere Fixierungselement 36e weist einen im Wesentlichen kreisförmigen Querschnitt III-III auf. Das weitere Fixierungselement 36e ist analog zu dem Fixierungselement 34e ausgebildet. Das weitere Fixierungselement 36e ist auf der gegenüberliegenden Seite in Wischrichtung 30e der Wischblattvorrichtung 10e angeordnet. Das Fixierungselement 34e und das weitere Fixierungselement 36e erstrecken sich vorzugsweise jeweils über die gesamte Haupterstreckung 38e der Wischblattvorrichtung 10e. Es wäre jedoch auch denkbar, dass die Wischblattvorrichtung 10e mehrere identische Fixierungselemente 34e und weitere Fixierungselemente 36e aufweist, welche über die Haupterstreckung 38e der Wischblattvorrichtung 10e verteilt angeordnet sind. Bei mehreren Fixierungselementen 34e und weiteren Fixierungselementen 36e verteilen sich diese insbesondere gemäß einer der Anordnung des ersten Ausführungsbeispiels über die gesamte Haupterstreckung 38e der Wischblattvorrichtung 10e.

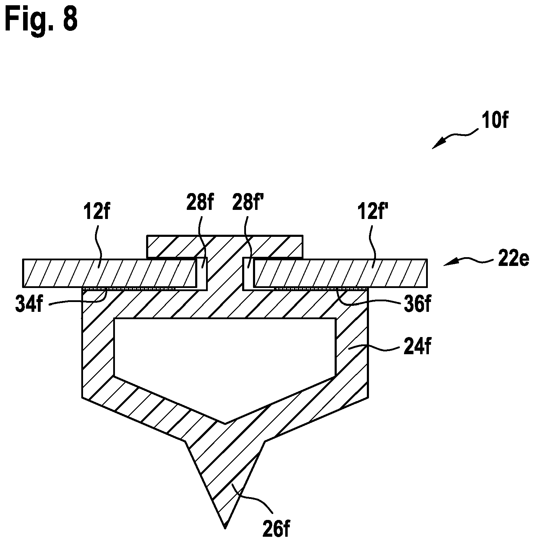

In Figur 8 ist eine weitere Ausführungsform einer Wischblattvorrichtung 10f im Querschnitt III-III gezeigt. Die Wischblattvorrichtung 10f umfasst zumindest eine Wischleisteneinheit 22f. Die Wischleisteneinheit 22f umfasst zumindest ein erstes Teilelement, insbesondere einen Wischgrundkörper 24f, und zumindest eine Wischlippe 26f. Der Wischgrundkörper 24f und die Wischlippe 26f sind verbunden, insbesondere einteilig, ausgebildet. Die Wischblattvorrichtung 10f umfasst zumindest eine, insbesondere genau zwei, Federschienen 12f, 12f'. Der Wischgrundkörper 24f der Wischleisteneinheit 22f bildet zwei Federschienenaufnahmen 28f aus. Die Federschienenaufnahmen 28f sind jeweils von außenliegenden Nuten gebildet. Die Federschienenaufnahmen 28f sind zu einer Aufnahme der zwei Federschienen 12f, 12f' ausgebildet. Die Wischblattvorrichtung 10f weist ferner eine nicht weiter dargestellte Windabweisereinheit 14f auf. Die Windabweisereinheit 14f umgreift in einem Befestigungsbereich den Wischgrundkörper 24f der Wischleisteneinheit 22f und die Federschienen 12f, 12f'. Grundsätzlich wäre jedoch auch eine andere einem Fachmann als sinnvoll erscheinende Befestigung der Federschienen 12f, 12f' an dem Wischgrundkörper 24f denkbar.

Die Wischblattvorrichtung 10f umfasst zumindest ein von den Federschienen 12f, 12f' verschieden ausgebildetes Fixierungselement 34f. Die Wischblattvorrichtung 10f umfasst zumindest ein von den Federschienen 12f, 12f' verschieden ausgebildetes weiteres Fixierungselement 36f. Das zumindest eine Fixierungselement 34f ist an dem Wischgrundkörper 24f angeordnet. Das zumindest eine Fixierungselement 34f ist an dem Wischgrundkörper 24f an einer Seite angeordnet, welcher den Federschienen 12f, 12f' zugewandten ist. Das zumindest eine Fixierungselement 34f ist an der zumindest einen Federschiene 12f, 12f' angeordnet. Das zumindest eine Fixierungselement 34f ist als Klebeverbindung, insbesondere als doppelseitiger Klebestreifen, ausgebildet. Das Fixierungselement 34f klebt den Wischgrundkörper 24f an die Federschiene 12f, 12f'. Das Fixierungselement 34f ist in einem montierten Zustand zu einer Reduzierung eines Spiels der zumindest einen Wischleisteneinheit 22f gegenüber den Federschienen 12f, 12f' dazu vorgesehen, einen Stoffschluss zwischen der Wischleisteneinheit 22f und den Federschienen 12f, 12f' herzustellen. Das zumindest eine weitere Fixierungselement 36f ist analog zu dem zumindest einen Fixierungselement 34f ausgebildet. Das zumindest eine weitere Fixierungselement 36f ist auf der gegenüberliegenden Seite in Wischrichtung 30f der Wischblattvorrichtung 10f angeordnet. Das Fixierungselement 34f und das weitere Fixierungselement 36f können jeweils sowohl als flächige Klebungen über die gesamte Haupterstreckung 38f der Wischblattvorrichtung 10f, als auch von einzelnen Klebepunkte, welche über die Haupterstreckung 38f der Wischblattvorrichtung 10f verteilt sind, gebildet sein. Bei einzelnen Klebepunkten verteilen sich diese insbesondere gemäß einer der Anordnung des ersten Ausführungsbeispiels über die gesamte Haupterstreckung 38f der Wischblattvorrichtung 10f.

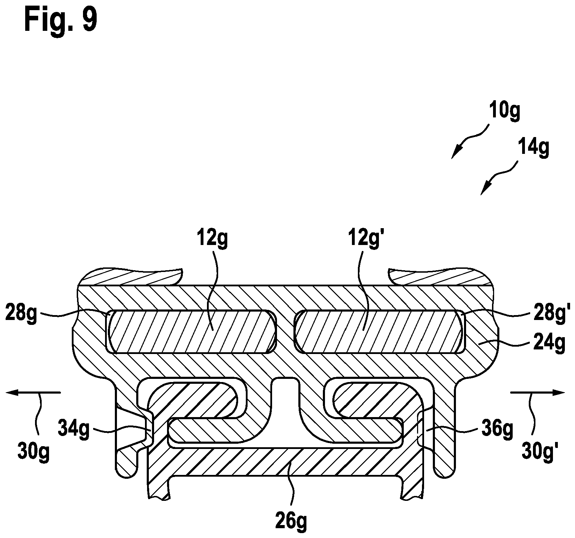

In Figur 9 ist ein Teilausschnitt einer Wischblattvorrichtung 10g im Querschnitt III-III gezeigt. Die Wischblattvorrichtung 10g weist eine Wischleisteneinheit 22g auf. Die Wischleisteneinheit 22g umfasst ein erstes Teilelement, insbesondere einen Wischgrundkörper 24g, und eine Wischlippe 26g. Die Wischlippe 26g weist einen dämpfenden Längskanal auf. Die Wischleisteneinheit 22g ist zweiteilig ausgebildet. Der Wischgrundkörper 24g und die Wischlippe 26g sind als separate Bauteile ausgebildet. Der Wischgrundkörper 24g und die Wischlippe 26g sind in einem montierten Zustand formschlüssig verbunden. Die Wischlippe 26g weist auf einer dem Wischgrundkörper 24g zugewandten Seite eine T-Nut auf, welche sich entlang einer Haupterstreckungsrichtung der Wischlippe 26g über die gesamte Wischlippe 26g erstreckt. Der Wischgrundkörper 24g weist auf einer Wischlippe 26g zugewandten Seite zwei in entgegengesetzte Richtungen weisende L-förmige Fortsätze auf, welche sich jeweils entlang einer Haupterstreckungsrichtung des Wischgrundkörpers 24g über den gesamte Wischgrundkörper 24g erstreckt. In einem montierten Zustand greifen die L-förmigen Fortsätze des Wischgrundkörpers 24g in die T-Nut der Wischlippe 26g ein und beide Teile bilden zusammen die Wischleisteneinheit 22g. Zudem weist der Wischgrundkörper 24g zwei Stege auf, welche sich auf beiden Seiten der Wischlippe 26g teilweise in Richtung der einen Reinigungskante erstrecken und die Wischlippe 26g zumindest teilweise umgreifen. Die Stege erstrecken sich jeweils entlang einer Haupterstreckungsrichtung des Wischgrundkörpers 24g über den gesamte Wischgrundkörper 24g. Die Wischblattvorrichtung 10g umfasst zwei Federschienen 12g, 12g'. Der Wischgrundkörper 24g der Wischleisteneinheit 22g bildet zwei Federschienenaufnahmen 28g aus. Die Federschienenaufnahmen 28g sind jeweils von innenliegenden, materiell umschlossenen Kanälen gebildet. Die Federschienenaufnahmen 28g sind zu einer Aufnahme der zwei Federschienen 12g, 12g' ausgebildet.

Die Wischblattvorrichtung 10g umfasst mehrere von den Federschienen 12g, 12g' verschieden ausgebildete Fixierungselemente 34g. Die Wischblattvorrichtung 10g umfasst mehrere von den Federschienen 12g, 12g' verschieden ausgebildete weitere Fixierungselement 36g. Die Fixierungselemente 34g sind an dem Wischgrundkörper 24g angeordnet. Die Fixierungselemente 34g sind zumindest teilweise in einem montierten Zustand an der Wischlippe 26g angeordnet. Die Fixierungselemente 34g sind jeweils an einem der Stege des Wischgrundkörpers 24g auf einer der Wischlippe 26g zugewandten Seite angeordnet. Die Fixierungselemente 34g sind jeweils als Zahnelement ausgebildet. Die Fixierungselemente 34g sind jeweils als eine im Wesentlichen zylindrische Ausformung in dem Steg des Wischgrundkörpers 24g ausgebildet. Die Fixierungselemente 34g sind insbesondere durch plastische Verformung des Stegs des Wischgrundkörpers 24g hergestellt. Dabei wäre insbesondere denkbar, dass diese nach einer Endmontage eingebracht sind, um eine einfache Montage zu ermöglichen. Die Fixierungselemente 34g sind in einem montierten Zustand zu einer Reduzierung eines Spiels des Wischgrundkörpers 24g gegenüber der Wischlippe 26g und damit der Wischleisteneinheit 22g gegenüber den Federschienen 12g, 12g' dazu vorgesehen, einen durch Verformung der Wischleisteneinheit 22g, insbesondere der Wischlippe 26g, erzeugten Formschluss zwischen der Wischleisteneinheit 22g und der Federschienen 12g, 12g' herzustellen. Die weiteren Fixierungselemente 36g sind analog zu den Fixierungselementen 34g ausgebildet. Die weiteren Fixierungselemente 36g sind auf der gegenüberliegenden Seite in Wischrichtung 30g der Wischblattvorrichtung 10g angeordnet. Die Fixierungselemente 34g und die weiteren Fixierungselemente 36g verteilen sich in einer der möglichen Anordnungen gemäß dem ersten Ausführungsbeispiel über die gesamte Haupterstreckung 38g der Wischblattvorrichtung 10g. Vorzugsweise sind die Fixierungselemente 34g und die weiteren Fixierungselemente 36g jeweils mit einem Intervall nebeneinander angeordnet, wobei die Fixierungselemente 34g gegenüber den weiteren Fixierungselementen 36g alternierend angeordnet sind.

## Patentansprüche

1. Wischblattvorrichtung mit zumindest einer Federschiene (12a, 12a';12b, 12b';12c, 12c';12d, 12d';12e, 12e';12f, 12f';12g, 12g'), mit zumindest einer Windabweisereinheit (14a, 14b, 14c, 14d, 14e, 14f, 14g), mit zumindest einer Wischleisteneinheit (22a, 22b, 22c, 22d, 22e, 22f, 22g), welche zumindest ein erstes Teilelement, insbesondere einen Wischgrundkörper (24a, 24b, 24c, 24d, 24e, 24f, 24g), und zumindest eine Wischlippe (26a, 26b, 26c, 26d, 26e, 26f, 26g) umfasst, und mit zumindest einem von der zumindest einen Federschiene (12a, 12a';12b, 12b';12c, 12c';12d, 12d';12e, 12e';12f, 12f',12g, 12g';12g, 12g') verschieden ausgebildeten Fixierungselement (34a, 34b, 34c, 34d, 34e, 34f, 34g), welches in einem montierten Zustand zumindest zu einer Reduzierung eines Spiels der zumindest einen Wischleisteneinheit (22a, 22b, 22c, 22d, 22e, 22f, 22g) gegenüber der Windabweisereinheit (14a, 14b, 14c, 14d, 14e, 14f, 14g) und/oder der Federschiene (12a, 12a';12b, 12b';12c, 12c';12d, 12d';12e, 12e';12f, 12f';12g, 12g') und/oder zumindest eines Teilelements der Wischleisteneinheit (22a, 22b, 22c, 22d, 22e, 22f, 22g) gegenüber der zumindest einen Wischlippe (26a, 26b, 26c, 26d, 26e, 26f, 26g) dazu vorgesehen ist, einen magnetischen Kraftschluss, einen Stoffschluss und/oder einen durch Verformung der Wischleisteneinheit (22a, 22b, 22c, 22d, 22e, 22f, 22g) erzeugten Formschluss zwischen der Wischleisteneinheit (22a, 22b, 22c, 22d, 22e, 22f, 22g) und der Windabweisereinheit (14a, 14b, 14c, 14d, 14e, 14f, 14g) und/oder der Federschiene (12a, 12a';12b, 12b';12c, 12c';12d, 12d';12e, 12e';12f, 12f';12g, 12g') herzustellen, **gekennzeichnet durch** zumindest ein Bügelelement (54a, 54a', 54a", 54a‴), an welchem das zumindest eine Fixierungselement (34a) angeordnet ist, wobei das Bügelelement (54a, 54a', 54a", 54a‴), zu einer zumindest teilweisen Einfassung der zumindest einen Wischleisteneinheit (22a) und/oder der zumindest einen Windabweisereinheit (14a) vorgesehen ist.

2. Wischblattvorrichtung nach Anspruch 1, **gekennzeichnet durch** zumindest ein weiteres von der zumindest einen Federschiene (12a, 12a';12b, 12b';12c, 12c';12d, 12d';12e, 12e';12f, 12f';12g, 12g') verschieden ausgebildetes Fixierungselement (36a, 36a`, 36a", 36a‴; 36b; 36c; 36d; 36e; 36f; 36g), welches in einem montierten Zustand zumindest zu einer Reduzierung eines Spiels der zumindest einen Wischleisteneinheit (22a, 22b, 22c, 22d, 22e, 22f, 22g) gegenüber der Windabweisereinheit (14a, 14b, 14c, 14d, 14e, 14f, 14g) und/oder der Federschiene (12a, 12a';12b, 12b';12c, 12c';12d, 12d';12e, 12e';12f, 12f';12g, 12g') und/oder zumindest eines Teilelements der Wischleisteneinheit (22a, 22b, 22c, 22d, 22e, 22f, 22g) gegenüber der zumindest einen Wischlippe (26a, 26b, 26c, 26d, 26e, 26f, 26g) dazu vorgesehen ist einen magnetischen Kraftschluss, einen Stoffschluss und/oder einen durch Verformung der Wischleisteneinheit (22a, 22b, 22c, 22d, 22e, 22f, 22g) erzeugten Formschluss zwischen der Wischleisteneinheit (22a, 22b, 22c, 22d, 22e, 22f, 22g) und der Windabweisereinheit (14a, 14b, 14c, 14d, 14e, 14f, 14g) und/oder der Federschiene (12a, 12a';12b, 12b';12c, 12c';12d, 12d';12e, 12e';12f, 12f';12g, 12g') herzustellen.

3. Wischblattvorrichtung nach Anspruch 2, **dadurch gekennzeichnet, dass** das zumindest eine weitere Fixierungselement (36a, 36a`, 36a", 36a‴; 36b; 36c; 36d; 36e; 36f; 36g) auf einer relativ zu dem zumindest einen Fixierungselement (34a, 34b, 34c, 34d, 34e, 34f, 34g) gegenüberliegenden Seite der Wischleisteneinheit (22a, 22b, 22c, 22d, 22e, 22f, 22g) angeordnet ist.

4. Wischblattvorrichtung nach einem der vorhergehenden Ansprüche, **dadurch gekennzeichnet, dass** das zumindest eine Fixierungselement (34a, 34b, 34c, 34d, 34e, 34f, 34g) in einem Bereich zwischen der zumindest einen Wischlippe (26a, 26b, 26c, 26d, 26e, 26f, 26g) und der zumindest einen Federschiene (12a, 12a';12b, 12b';12c, 12c';12d, 12d';12e, 12e';12f, 12f';12g, 12g') angeordnet ist.

5. Wischblattvorrichtung nach einem der vorhergehenden Ansprüche, **dadurch gekennzeichnet, dass** das zumindest eine Fixierungselement (34a, 34b, 34c, 34d, 34e, 34f, 34g) sich zumindest im Wesentlichen über die gesamte Haupterstreckung (38a, 38b, 38c, 38d, 38e, 38f, 38g) der Wischblattvorrichtung erstreckt.

6. Wischblattvorrichtung nach einem der vorhergehenden Ansprüche, **dadurch gekennzeichnet, dass** das zumindest eine Fixierungselement (34a, 34b, 34c, 34d, 34e, 34f, 34g) einstückig mit der Windabweisereinheit (14a, 14b, 14c, 14d, 14e, 14f, 14g) ausgebildet ist.

7. Wischblattvorrichtung nach einem der vorhergehenden Ansprüche, **dadurch gekennzeichnet, dass** das zumindest eine Fixierungselement (34a, 34b, 34c, 34d, 34e, 34f, 34g) in einem montierten Zustand zumindest teilweise von einem Teilelement der zumindest einen Wischleisteneinheit (22a, 22b, 22c, 22d, 22e, 22f, 22g) umschlossen ist.

8. Wischblattvorrichtung nach Anspruch 1, **dadurch gekennzeichnet, dass** das zumindest eine Bügelelement (54a, 54a', 54a", 54a‴) die zumindest eine Windabweisereinheit (14a) zumindest teilweise umgreift.

9. Wischblattvorrichtung nach einem der vorhergehenden Ansprüche, **dadurch gekennzeichnet, dass** das zumindest eine Fixierungselement (34c, 34f) als Klebeverbindung ausgebildet ist.

10. Wischblattvorrichtung nach einem der vorhergehenden Ansprüche, **dadurch gekennzeichnet, dass** das zumindest eine Fixierungselement (34e) als zumindest ein Magnet ausgebildet ist.

11. Wischblattvorrichtung nach einem der vorhergehenden Ansprüche, **dadurch gekennzeichnet, dass** das zumindest eine Fixierungselement (34a, 34b, 34g) als Zahnelement ausgebildet ist.

12. Wischblattvorrichtung nach einem der vorhergehenden Ansprüche, **dadurch gekennzeichnet, dass** das zumindest eine Fixierungselement (34d) als Schienenelement ausgebildet ist.

## Claims

1. Wiper blade device with at least one spring rail (12a, 12a'; 12b, 12b'; 12c, 12c'; 12d, 12d'; 12e, 12e'; 12f, 12f'; 12g, 12g'), with at least one wind deflector unit (14a, 14b, 14c, 14d, 14e, 14f, 14g), with at least one wiper strip unit (22a, 22b, 22c, 22d, 22e, 22f, 22g) which comprises at least one first partial element, in particular a wiper main body (24a, 24b, 24c, 24d, 24e, 24f, 24g), and at least one wiper lip (26a, 26b, 26c, 26d, 26e, 26f, 26g), and with at least one fixing element (34a, 34b, 34c, 34d, 34e, 34f, 34g) which is formed differently from the at least one spring rail (12a, 12a'; 12b, 12b'; 12c, 12c'; 12d, 12d'; 12e, 12e'; 12f, 12f'; 12g, 12g') and, in a mounted state, is provided at least for reducing a clearance between the at least one wiper strip unit (22a, 22b, 22c, 22d, 22e, 22f, 22g) and the wind deflector unit (14a, 14b, 14c, 14d, 14e, 14f, 14g) and/or between the spring rail (12a, 12a'; 12b, 12b'; 12c, 12c'; 12d, 12d'; 12e, 12e'; 12f, 12f'; 12g, 12g') and/or at least one partial element of the wiper strip unit (22a, 22b, 22c, 22d, 22e, 22f, 22g) and the at least one wiper lip (26a, 26b, 26c, 26d, 26e, 26f, 26g) in order to produce a magnetic force-fitting connection, a materially bonded connection and/or a form-fitting connection, which is produced by deformation of the wiper strip unit (22a, 22b, 22c, 22d, 22e, 22f, 22g) between the wiper strip unit (22a, 22b, 22c, 22d, 22e, 22f, 22g) and the wind deflector unit (14a, 14b, 14c, 14d, 14e, 14f, 14g) and/or the spring rail (12a, 12a'; 12b, 12b'; 12c, 12c'; 12d, 12d'; 12e, 12e'; 12f, 12f'; 12g, 12g'), **characterized by** at least one clip element (54a, 54a', 54a", 54a‴), on which the at least one fixing element (34a) is arranged, wherein the clip element (54a, 54a', 54a'', 54a‴) is provided for at least partially surrounding the at least one wiper strip element (22a) and/or the at least one wind deflector unit (14a).

2. Wiper blade device according to Claim 1, **characterized by** at least one further fixing element (36a, 36a', 36a", 36a‴; 36b; 36c; 36d; 36e; 36f; 36g) which is formed differently from the at least one spring rail (12a, 12a'; 12b, 12b'; 12c, 12c'; 12d, 12d'; 12e, 12e'; 12f, 12f'; 12g, 12g') and, in a mounted state, is provided at least for reducing a clearance between the at least one wiper strip unit (22a, 22b, 22c, 22d, 22e, 22f, 22g) and the wind deflector unit (14a, 14b, 14c, 14d, 14e, 14f, 14g) and/or between the spring rail (12a, 12a'; 12b, 12b'; 12c, 12c'; 12d, 12d'; 12e, 12e'; 12f, 12f'; 12g, 12g') and/or at least one partial element of the wiper strip unit (22a, 22b, 22c, 22d, 22e, 22f, 22g) and the at least one wiper lip (26a, 26b, 26c, 26d, 26e, 26f, 26g) in order to produce a magnetic force-fitting connection, a materially bonded connection and/or a form-fitting connection, which is produced by deformation of the wiper strip unit (22a, 22b, 22c, 22d, 22e, 22f, 22g) between the wiper strip unit (22a, 22b, 22c, 22d, 22e, 22f, 22g) and the wind deflector unit (14a, 14b, 14c, 14d, 14e, 14f, 14g) and/or the spring rail (12a, 12a'; 12b, 12b'; 12c, 12c'; 12d, 12d'; 12e, 12e'; 12f, 12f'; 12g, 12g').

3. Wiper blade device according to Claim 2, **characterized in that** the at least one further fixing element (36a, 36a', 36a", 36a'''; 36b; 36c; 36d; 36e; 36f; 36g) is arranged on an opposite side of the wiper strip element (22a, 22b, 22c, 22d, 22e, 22f, 22g) relative to the at least one fixing element (34a, 34b, 34c, 34d, 34e, 34f, 34g).

4. Wiper blade device according to one of the preceding claims, **characterized in that** the at least one fixing element (34a, 34b, 34c, 34d, 34e, 34f, 34g) is arranged in a region between the at least one wiper lip (26a, 26b, 26c, 26d, 26e, 26f, 26g) and the at least one spring rail (12a, 12a'; 12b, 12b'; 12c, 12c'; 12d, 12d'; 12e, 12e'; 12f, 12f'; 12g, 12g').

5. Wiper blade device according to one of the preceding claims, **characterized in that** the at least one fixing element (34a, 34b, 34c, 34d, 34e, 34f, 34g) extends at least substantially over the entire main extent (38a, 38b, 38c, 38d, 38e, 38f, 38g) of the wiper blade device.

6. Wiper blade device according to one of the preceding claims, **characterized in that** the at least one fixing element (34a, 34b, 34c, 34d, 34e, 34f, 34g) is formed integrally with the wind deflector unit (14a, 14b, 14c, 14d, 14e, 14f, 14g).

7. Wiper blade device according to one of the preceding claims, **characterized in that** the at least one fixing element (34a, 34b, 34c, 34d, 34e, 34f, 34g), in a mounted state, is at least partially surrounded by a partial element of the at least one wiper strip unit (22a, 22b, 22c, 22d, 22e, 22f, 22g).

8. Wiper blade device according to Claim 1, **characterized in that** the at least one clip element (54a, 54a', 54a", 54a‴) at least partially embraces the at least one wind deflector unit (14a).

9. Wiper blade device according to one of the preceding claims, **characterized in that** the at least one fixing element (34c, 34f) is in the form of an adhesive connection.

10. Wiper blade device according to one of the preceding claims, **characterized in that** the at least one fixing element (34e) is in the form of at least one magnet.

11. Wiper blade device according to one of the preceding claims, **characterized in that** the at least one fixing element (34a, 34b, 34g) is in the form of a tooth element.

12. Wiper blade device according to one of the preceding claims, **characterized in that** the at least one fixing element (34d) is in the form of a rail element.

## Revendications

1. Dispositif formant balai d'essuie-glace comportant au moins un rail élastique (12a, 12a' ; 12b, 12b' ; 12c, 12c' ; 12d, 12d' ; 12e, 12e' ; 12f, 12f' ; 12g, 12g'), comportant au moins une unité de déflecteur d'air (14a, 14b, 14c, 14d, 14e, 14f, 14g), comportant au moins une unité de lame d'essuyage (22a, 22b, 22c, 22d, 22e, 22f, 22g), laquelle comprend au moins un premier élément partiel, en particulier un corps de base d'essuyage (24a, 24b, 24c, 24d, 24e, 24f, 24g), et au moins une lèvre d'essuyage (26a, 26b, 26c, 26d, 26e, 26f, 26g), et comportant au moins un élément de fixation (34a, 34b, 34c, 34d, 34e, 34f, 34g) formé différemment de l'au moins un rail élastique (12a, 12a' ; 12b, 12b' ; 12c, 12c' ; 12d, 12d' ; 12e, 12e' ; 12f, 12f',12g, 12g' ; 12g, 12g'), lequel élément de fixation, dans un état monté, au moins pour une réduction d'un jeu de l'au moins une unité de lame d'essuyage (22a, 22b, 22c, 22d, 22e, 22f, 22g) par rapport à l'unité de déflecteur d'air (14a, 14b, 14c, 14d, 14e, 14f, 14g) et/ou au rail élastique (12a, 12a' ; 12b, 12b' ; 12c, 12c' ; 12d, 12d' ; 12e, 12e' ; 12f, 12f' ; 12g, 12g') et/ou d'au moins un élément partiel de l'unité de lame d'essuyage (22a, 22b, 22c, 22d, 22e, 22f, 22g) par rapport à l'au moins une lèvre d'essuyage (26a, 26b, 26c, 26d, 26e, 26f, 26g), est prévu pour produire un flux de force magnétique, une liaison de matière et/ou un engagement par complémentarité de formes généré par déformation de l'unité de lame d'essuyage (22a, 22b, 22c, 22d, 22e, 22f, 22g) entre l'unité de lame d'essuyage (22a, 22b, 22c, 22d, 22e, 22f, 22g) et l'unité de déflecteur d'air (14a, 14b, 14c, 14d, 14e, 14f, 14g) et/ou le rail élastique (12a, 12a' ; 12b, 12b' ; 12c, 12c' ; 12d, 12d' ; 12e, 12e' ; 12f, 12f' ; 12g, 12g'), **caractérisé par** au moins un élément étrier (54a, 54a', 54a", 54a' ''), sur lequel l'au moins un élément de fixation (34a) est disposé, l'élément étrier (54a, 54a', 54a'', 54a''') étant prévu pour encadrer au moins partiellement l'au moins une unité de lame d'essuyage (22a) et/ou l'au moins une unité de déflecteur d'air (14a).

2. Dispositif formant balai d'essuie-glace selon la revendication 1, **caractérisé par** au moins un autre élément de fixation (36a, 36a', 36a'', 36a''' ; 36b ; 36c ; 36d ; 36e ; 36f ; 36g) réalisé différemment de l'au moins un rail élastique (12a, 12a' ; 12b, 12b' ; 12c, 12c' ; 12d, 12d' ; 12e, 12e' ; 12f, 12f' ; 12g, 12g'), lequel autre élément de fixation, dans un état monté, au moins pour une réduction d'un jeu de l'au moins une unité de lame d'essuyage (22a, 22b, 22c, 22d, 22e, 22f, 22g) par rapport à l'unité de déflecteur d'air (14a, 14b, 14c, 14d, 14e, 14f, 14g) et/ou au rail élastique (12a, 12a' ; 12b, 12b' ; 12c, 12c' ; 12d, 12d' ; 12e, 12e' ; 12f, 12f' ; 12g, 12g') et/ou d'au moins un élément partiel de l'unité de lame d'essuyage (22a, 22b, 22c, 22d, 22e, 22f, 22g) par rapport à l'au moins une lèvre d'essuyage (26a, 26b, 26c, 26d, 26e, 26f, 26g), est prévu pour produire un flux de force magnétique, une liaison de matière et/ou un engagement par complémentarité de formes généré par déformation de l'unité de lame d'essuyage (22a, 22b, 22c, 22d, 22e, 22f, 22g) entre l'unité de lame d'essuyage (22a, 22b, 22c, 22d, 22e, 22f, 22g) et l'unité de déflecteur d'air (14a, 14b, 14c, 14d, 14e, 14f, 14g) et/ou le rail élastique (12a, 12a' ; 12b, 12b' ; 12c, 12c' ; 12d, 12d' ; 12e, 12e' ; 12f, 12f' ; 12g, 12g').

3. Dispositif formant balai d'essuie-glace selon la revendication 2, **caractérisé en ce que** l'au moins un autre élément de fixation (36a, 36a', 36a'', 36a''' ; 36b ; 36c ; 36d ; 36e ; 36f ; 36g) est disposé sur un côté de l'unité de lame d'essuyage (22a, 22b, 22c, 22d, 22e, 22f, 22g) qui est opposé par rapport à l'au moins un élément de fixation (34a, 34b, 34c, 34d, 34e, 34f, 34g).

4. Dispositif formant balai d'essuie-glace selon l'une des revendications précédentes, **caractérisé en ce que** l'au moins un élément de fixation (34a, 34b, 34c, 34d, 34e, 34f, 34g) est disposé dans une région entre l'au moins une lèvre d'essuyage (26a, 26b, 26c, 26d, 26e, 26f, 26g) et l'au moins un rail élastique (12a, 12a' ; 12b, 12b' ; 12c, 12c' ; 12d, 12d' ; 12e, 12e' ; 12f, 12f' ; 12g, 12g').

5. Dispositif formant balai d'essuie-glace selon l'une des revendications précédentes, **caractérisé en ce que** l'au moins un élément de fixation (34a, 34b, 34c, 34d, 34e, 34f, 34g) s'étend au moins sensiblement sur toute l'étendue principale (38a, 38b, 38c, 38d, 38e, 38f, 38g) du dispositif formant balai d'essuie-glace.

6. Dispositif formant balai d'essuie-glace selon l'une des revendications précédentes, **caractérisé en ce que** l'au moins un élément de fixation (34a, 34b, 34c, 34d, 34e, 34f, 34g) est formé d'une seule pièce avec l'unité de déflecteur d'air (14a, 14b, 14c, 14d, 14e, 14f, 14g).

7. Dispositif formant balai d'essuie-glace selon l'une des revendications précédentes, **caractérisé en ce que** l'au moins un élément de fixation (34a, 34b, 34c, 34d, 34e, 34f, 34g) est entouré au moins partiellement par un élément partiel de l'au moins une unité de lame d'essuyage (22a, 22b, 22c, 22d, 22e, 22f, 22g) dans un état monté.

8. Dispositif formant balai d'essuie-glace selon la revendication 1, **caractérisé en ce que** l'au moins un élément étrier (54a, 54a', 54a'', 54a''') vient en prise au moins partiellement autour de l'au moins une unité de déflecteur d'air (14a).

9. Dispositif formant balai d'essuie-glace selon l'une des revendications précédentes, **caractérisé en ce que** l'au moins un élément de fixation (34c, 34f) est réalisé sous forme de liaison adhésive.

10. Dispositif formant balai d'essuie-glace selon l'une des revendications précédentes, **caractérisé en ce que** l'au moins un élément de fixation (34e) est réalisé sous la forme d'au moins un aimant.

11. Dispositif formant balai d'essuie-glace selon l'une des revendications précédentes, **caractérisé en ce que** l'au moins un élément de fixation (34a, 34b, 34g) est réalisé sous la forme d'un élément denté.

12. Dispositif formant balai d'essuie-glace selon l'une des revendications précédentes, **caractérisé en ce que** l'au moins un élément de fixation (34d) est réalisé sous la forme d'un élément de rail.
